(19) Europäisches Patentamt
European Patent Office
Office européen des brevets

(11) **EP 4 760 196 A1**

(12) **EUROPEAN PATENT APPLICATION**

(43) Date of publication:
**17.06.2026 Bulletin 2026/25**

(21) Application number: **25223925.6**

(22) Date of filing: **16.12.2025**

(51) International Patent Classification (IPC):
**F41A 3/00** *(2006.01)* **F41A 21/12** *(2006.01)*

(52) Cooperative Patent Classification (CPC):
**F41A 3/00; F41A 21/12;** B64U 10/14; B64U 30/26;
B64U 2101/18; B64U 2201/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **16.12.2024 IL 31773724**

(71) Applicant: **Zuhovitzky, Itamar
4961000 Kfar Shmaryahu (IL)**

(72) Inventor: **Zuhovitzky, Itamar
4961000 Kfar Shmaryahu (IL)**

(74) Representative: **ip21 Ltd
Central Formalities Department
Suite 2
The Old Dairy
Elm Farm Business Park
Wymondham
Norwich, Norfolk NR18 0SW (GB)**

(54) **DISPOSABLE BARREL FOR AN AERIAL FIRING MODULE**

(57) A disposable barrel that is operatively couplable to an aerial firing module, the disposable barrel comprising: a cap; and a cartridge sleeve that is securable to the cap via a rear end of the cartridge sleeve, wherein a front end of the cartridge sleeve comprises a muzzle of the disposable barrel, the cartridge sleeve configured in size and shape to house a cartridge, wherein the cap is configured to act as a breach block during a firing operation of the disposable barrel, wherein the disposable barrel is attachable and detachable from the aerial firing module, whereby detaching the disposable barrel from the aerial firing module comprises detaching the cap and the cartridge sleeve from the aerial firing module.

**FIG. 1B**

**FIG. 1C**

**Description**

CROSS-REFERENCE TO RELATED APPLICATION

This application claims priority from Israel Patent Application No. 317737 entitled "DISPOSABLE BARREL FOR AN AERIAL FIRING MODULE", filed December 16, 2024.

TECHNICAL FIELD

The present disclosure relates to firing modules in general, and to disposable barrels for drone-borne aerial firing modules, in particular.

BACKGROUND

Drones, also referred to as Unmanned Aerial Vehicles (UAVs), have increasingly been utilized in various industries, including military applications, photography, surveillance, agriculture, and logistics. The versatility of drones, along with advancements in their stabilization and flight control systems, has opened new possibilities for their integration with different payloads and add-on modules.

One area of potential application is the use of drones in precision shooting or target engagement systems, which can be valuable for both military and non-military purposes such as wildlife management, aerial pest control, or sports.

BRIEF SUMMARY

One exemplary embodiment of the disclosed subject matter is a disposable barrel that is operatively couplable to an aerial firing module, the aerial firing module is operatively couplable to a drone, the disposable barrel comprising: a cap; and a cartridge sleeve that is securable to the cap via a rear end of the cartridge sleeve, wherein a front end of the cartridge sleeve comprises a muzzle of the disposable barrel, the cartridge sleeve configured in size and shape to house a cartridge, wherein the cap is configured to act as a breach block during a firing operation of the disposable barrel, wherein the disposable barrel is attachable and detachable from the aerial firing module, whereby detaching the disposable barrel from the aerial firing module comprises detaching the cap and the cartridge sleeve from the aerial firing module.

Optionally, the firing operation of the disposable barrel comprises firing the cartridge out of the muzzle, thereby causing a deformation of an element of the disposable barrel, the element is selected from: the cap and/or the cartridge sleeve.

Optionally, a subsequent firing operation is performed by: detaching the disposable barrel from the aerial firing module; and replacing the disposable barrel with a second disposable barrel different from the disposable barrel, the second disposable barrel comprises a second cap and a second cartridge sleeve, wherein the subsequent firing operation occurs after the firing operation.

Optionally, the firing operation releases one or more gases in the cartridge sleeve, wherein the deformation is caused by at least one of: the one or more gases, an explosive force of the firing operation, or a recoil force.

Optionally, the disposable barrel constitutes both a shooting tube and a chamber, wherein the cartridge sleeve excludes any barrel extension that extends beyond the chamber in a direction of the muzzle.

Optionally, the cartridge sleeve is securable to the cap using threaded coupling means.

Optionally, the cartridge is insertable into the cartridge sleeve via the rear end of the cartridge sleeve, wherein a rim of the cartridge is wider than the muzzle of the cartridge sleeve, wherein the cartridge is insertable into the cartridge sleeve before the rear end of the cartridge sleeve is secured to the cap.

Optionally, the cap and the cartridge sleeve are made of at least one material selected from: stainless steel, carbon steel, aluminum, titanium, printed plastic, or the like.

Optionally, the drone has a carrying capacity of no more than 500 grams, and a weight of the disposable barrel enables the aerial firing module to comply with the carrying capacity of the drone.

Optionally, the drone has a carrying capacity of no more than 300 grams, and a weight of the disposable barrel enables the aerial firing module to comply with the carrying capacity of the drone.

Optionally, said configuring the cap to act as the breach block comprises using the cap as a seal to prevent propellant gas in the cartridge sleeve from escaping through the rear end of the cartridge sleeve, and to channel the propellant gas forward towards the muzzle.

Optionally, the cartridge comprises at least one pellet.

Another exemplary embodiment of the disclosed subject matter is a system comprising: a drone; an aerial firing module that is mountable on said drone, wherein the on aerial firing module is operative to selectively receive a disposable barrel; and the disposable barrel, wherein the disposable barrel comprises: a cap; and a cartridge sleeve that is securable to the cap via a rear end of the cartridge sleeve, wherein a front end of the cartridge sleeve comprises a muzzle of the disposable barrel, the cartridge sleeve configured in size and shape to house a cartridge, wherein the cap is configured to act as a breach block during a firing operation of the disposable barrel, wherein the disposable barrel is attachable and detachable from the aerial firing module.

Optionally, the aerial firing module comprises a mount that is operatively coupled to the disposable barrel, wherein a single user operation can detach the disposable barrel from the mount.

Optionally, the disposable barrel is manufactured from lightweight material, the lightweight material is selected from a group consisting of: stainless steel, carbon steel, aluminum, titanium, and printed plastic.

Optionally, the weight of the aerial firing module is less than 200 grams.

Optionally, the weight of the aerial firing module is less than 120 grams.

Yet another exemplary embodiment of the disclosed subject matter is a method for utilizing an aerial firing module that is mounted on a drone, the method comprising: securing a first disposable barrel to the aerial firing module, the first disposable barrel comprises a first cartridge sleeve that houses a first cartridge, a first cap is secured to a rear end of the first cartridge sleeve; performing a first firing operation, wherein the first cap acts as a breach block during the first firing operation, whereby the first disposable barrel or portion thereof is deformed; detaching the first disposable barrel from the aerial firing module; securing a second disposable barrel to the aerial firing module, the second disposable barrel comprises a second cartridge sleeve that houses a second cartridge, a second cap is secured to a rear end of the second cartridge sleeve; performing a second firing operation, wherein the second cap acts as a breach block during the second firing operation, whereby the second disposable barrel or portion thereof is deformed.

THE BRIEF DESCRIPTION OF THE SEVERAL VIEWS OF THE DRAWINGS

The present disclosed subject matter will be understood and appreciated more fully from the following detailed description taken in conjunction with the drawings in which corresponding or like numerals or characters indicate corresponding or like components. Unless indicated otherwise, the drawings provide exemplary embodiments or aspects of the disclosure and do not limit the scope of the disclosure. In the drawings:

Figure 1A shows a schematic illustration of a barrel;

Figure 1B shows a schematic exploded view of a barrel, in accordance with some exemplary embodiments of the disclosed subject matter;

Figure 1C shows a schematic assembled view of a barrel, in accordance with some exemplary embodiments of the disclosed subject matter;

Figures 2A-2G show schematic views of an exemplary add-on aerial firing module mounted on a drone, in accordance with some exemplary embodiments of the disclosed subject matter;

Figures 3A-3F show schematic views of an exemplary add-on aerial firing module, in accordance with some exemplary embodiments of the disclosed subject matter; and

Figure 4 shows a flowchart diagram of a method, in accordance with some exemplary embodiments of the disclosed subject matter.

DETAILED DESCRIPTION

One technical problem dealt with by the disclosed subject matter is to provide a drone with firing capabilities. In some exemplary embodiments, a drone with shooting capabilities may be beneficial for military personnel, as it enables them to acquire targets and gather data without putting the fighters at risk.

In some exemplary embodiments, manufacturing a drone with shooting capabilities may be challenging. In some exemplary embodiments, designing a dedicated drone with fully integrated firing capabilities from the outset may be complex, resource-intensive, time consuming, and inefficient. For example, in order to manufacture a dedicated drone, specialized expertise is required across multiple domains, including aerodynamics and flight systems, propulsion and engine design, electronics and control systems, performance testing, regulatory compliance, reliability testing, in addition to weapon development and integration, adding significant complexity to the design and manufacturing process. As another example, manufacturing a dedicated drone requires extensive prototyping and iterative improvements, which may significantly delay time to market. In some exemplary embodiments, it may be desired to overcome these drawbacks, and provide an alternative solution that is more cost-effective and expeditious than developing specialized shooting drones from the ground up.

Another technical problem dealt with by the disclosed subject matter is to provide a retrofit add-on firing module that is attachable to drones. In some exemplary embodiments, developing such an add-on firing module offers a more cost-effective alternative to building a dedicated drone with integrated firing capabilities from the ground up, reducing both development time and costs. For example, leveraging existing drones allows to focus resources on optimizing the add-on firing module without the need to reinvent flight systems and propulsion technologies. As another example, leveraging existing drones allows to benefit from established supply chains, maintenance protocols, and field-tested reliability, increasing robustness and scalability.

In some exemplary embodiments, manufacturing a retrofit add-on firing module instead of a dedicated drone may face many challenges. For example, it may be desired to ensure that the add-on firing module can be easily attached and detached from one or more types of drones, while providing full firing capabilities. As another example, it may be desired to ensure the add-on firing module operates effectively, and that it does not significantly impact the drone's performance, particularly regarding flight duration, range, and maneuverability. As another example, it may be desired to ensure the add-on firing module facilitates lethality and provides accurate firing capabilities, e.g., within a defined shooting range.

Yet another technical problem dealt with by the disclosed subject matter is to provide an add-on firing module that can be integrated into commercially available drones. For example, it may be desired to integrate an add-on firing module with commercially available drones such as imaging drones, micro drones, palm-sized drones, or the like. In some exemplary embodiments, commercially available drones may be cost-effective and may possess advanced flight performance and precision. In some exemplary embodiments, commercially available drones may be utilized for a plurality of scenarios, such as for scanning structures to locate enemy combatants, for monitoring non-combat terrains such as agricultural fields, for patrolling borders to detect unauthorized activity, for indoor scenarios (e.g., scanning indoor spaces such as rooms or tunnels), or the like.

In some exemplary embodiments, it may be desired to provide an add-on firing module that can be integrated into commercially available imaging drones, and can perform shooting operations with an acceptable accuracy. In some exemplary embodiments, in order to enable integration with a commercially available drone, the add-on firing module must be full compatibility to the utilized drone. For example, the add-on firing module must be full compatibility to the carrying capacity of the drone.

Yet another technical problem dealt with by the disclosed subject matter is to provide an add-on firing module that can be integrated into small drones such as micro drones, palm-sized drones, drones having a volume of no more than 0.125 m$^3$, or the like. For example, such drones may offer significant advantages on the battlefield due to their small size and stealthy characteristics. Being hard to detect by enemies, both visually and by radar, they can navigate close to the ground or through complex environments like urban areas, avoiding detection from traditional surveillance systems. Their agility and maneuverability allow them to enter confined spaces, such as buildings or caves, where larger drones or conventional reconnaissance tools cannot reach. Their low signature makes them highly effective for surveillance, reconnaissance, and targeted missions without alerting enemy forces, giving operators a tactical edge in modern warfare.

In some exemplary embodiments, implementing a shooting system as an add-on to a relatively small drone presents unique challenges. In some exemplary embodiments, designing an add-on firing module that is configured to be carried by a relatively small drone may be challenging, at least since the carrying capacity of small drones may be extremely limited (e.g., up to 500 grams, up to 200 grams, or the like), leading to nearly impossible weight constraints on the add-on firing module. This approach significantly diverges from that of dedicated shooting drones, which are typically capable of carrying heavy payloads. For example, dedicated shooting drones may be designed from the ground up to carry substantial weights, and may be equipped with appropriate motors and batteries.

In some exemplary embodiments, the lightweight and compact nature of small drones such as micro drones, significantly limits the size, weight, and power consumption of any add-on firing module, including a shooting mechanism. For example, micro drones can weigh less than 500 grams, 400 grams, 300 grams, or the like. In such cases, the drones may be limited in their payload capacity to very low weights such as 300 grams, 200 grams, 100 grams, or the like.

Yet another technical problem dealt with by the disclosed subject matter is to provide an add-on firing module that can facilitate lethality in indoor environments. In some cases, it may be desired to equip the drones with the ability to engage targets effectively when a threat is identified within a specified range, such as in short-distance encounters. In some cases, it may be desired that within a relative short range, generally referred to herein as "near-lethal range" (e.g., 1 meter, 3 meters, 5 meters, 10 meters, or the like) a projectile can cause significant harm or lethality to a target, particularly in tactical or defensive scenarios. For example, it may be desired to provide the drones with the capability of performing effective shooting when an enemy is detected in a scanned structure, with a near lethal range, or any other lethal range.

Yet another technical problem dealt with by the disclosed subject matter is providing an add-on firing module that is user-friendly and intuitive. It may be desired to enhance the human-machine interface and interaction process through an intuitive and seamless user interface (UI). For example, it may be desired that the add-on firing module may be easy to mount on a drone, in field conditions. As another example, it may be desired that the add-on firing module will be easily detachable from drones and easily re-attachable to different drones. As another example, it may be desired that the add-on firing module will enable easy loading and reloading of ammunition. This involves creating a straightforward process for reloading the ammunition without complex mechanisms.

Yet another technical problem dealt with by the disclosed subject matter is providing a firing module that is durable and safe to use, minimizing potential risks associated with its use such as unintended discharge, particularly in situations where the drone crashes. For example, it may be desired that the firing module will be durable and reliable, enabling to reuse the firing module for firing operations without damaging the drone or the user.

Yet another technical problem dealt with by the disclosed subject matter is to secure the barrel to the firing module, such that the firing module will be able to withstand the recoil from firing operations of the barrel without disrupting the drone's balance or maneuverability.

One technical solution of the disclosed subject matter is to provide an aerial firing module with a disposable barrel. In some exemplary embodiments, the barrel may be designed to have extremely low weight, thereby reducing the overall weight of the aerial firing module and enabling the aerial firing module to comply with carrying capacities of small drones such as micro drones.

In some exemplary embodiments, the aerial firing module may be an add-on aerial firing module that is designed for attachment to and detachment from one or more types of drones, e.g., commercially available drones such as micro drones, palm-held drones, or the like. In some exemplary embodiments, the add-on aerial firing module may utilize various mechanisms for securing the add-on aerial firing module to a selected drone. For example, the mechanisms may comprise threaded coupling means, clamping mechanisms, quick-release clamping mechanism, quick-release fasteners, or the like.

In some cases, the add-on aerial firing module may be attachable to any area of the drone platform. For example, the add-on aerial firing module may be mounted on top of the drone, below the drone, to a side of the drone, or the like.

In some exemplary embodiments, the aerial firing module, including the disposable barrel, may be manufactured and controlled separately from the drone. For example, the drone may be commercially manufactured together with a remote controller, such as a joystick for altitude, yaw, and lateral movement, and buttons for camera operation and quick access to flight modes. In other examples, the drone may be provided with any other remote controller, e.g., a gamepad controller, a touchscreen tablet, gesture control, voice control, a combination thereof, or the like. In some cases, drones may have matching goggles for providing users with First-Person View (FPV).

In some exemplary embodiments, the aerial firing module may be controlled independently from the drone, such as via a separate remote controller. In some exemplary embodiments, the separate remote controller of the aerial firing module may comprise a button interfaces, a touchscreen interface, a joystick, a gamepad controller, or the like. In some cases, the aerial firing module may be operated by a user, e.g., a human or non-human user, independently from the operation of the drone. In one scenario, a single user may operates two physically separate remote controllers, one for the aerial firing module and another for the drone. In a second scenario, different users may operate the aerial firing module and the drone using the respective remote controllers. In other cases, a single remote controller may integrate both remote controllers, such as by housing both controllers within one physical unit. It is noted that the division of the controlling means reduces the need to integrate the controller of the aerial firing module (e.g., an add-on aerial firing module) with the controller of the drone. This may enable the use of the same aerial firing module on different types of drones or different drones. In addition, this may enable using the aerial firing module even in cases where the drone does not provide an interface for controlling it using third-party controllers, and without the assistance, involvement and permission of the manufacturer of the drone. In some embodiments, a single unified controller may be provided to control both the movements of the drone and the operations of the aerial firing module.

In some exemplary embodiments, in order to comply with extremely low carrying capacities of small drones, the aerial firing module may be designed to have a low overall weight. For example, a micro drone that weighs between 100 and 500 grams, may have a payload-to-weight ratio ranging from 10% to 100% of its weight, and the aerial firing module may weigh less than the maximal payload capability.

In some exemplary embodiments, in order to reduce an overall weight of the aerial firing module, a barrel of the aerial firing module, configured for firing projectiles, may be designed to be disposable. In some exemplary embodiments, in case a barrel is disposable, replaceable, or the like, and is not re-used, its durability may be compromised, enabling to manufacture the barrel in a lightweight manner, e.g., to be extremely lightweight.

In some exemplary embodiments, designing the barrel to be replaceable, disposable, removable, swappable, interchangeable, or the like, may enable to manufacture the barrel with reduced weight. For example, the barrel may be designed with reduced wall thickness, which is sufficient for at least one firing operation, but not for a large number of firing operations, e.g., two firing operations, three firing operations, ten firing operations, or the like. In some exemplary embodiments, reducing the wall thickness may, on the one hand, reduce the weight of the aerial firing module, making it compatible to be carried by micro drones, while requiring the barrel to be disposable due to reduced durability. For example, reduced wall thickness may result with the disposable barrel bending after one or more firing operations and becoming unusable (or potentially unsafe for reuse).

In some exemplary embodiments, the disposable barrel may comprise a cartridge sleeve, comprising a hollow tube that can be fitted around a cartridge, and a cap, which may be securable and/or fitted to the cartridge sleeve. In some exemplary embodiments, the reduction in wall thickness may affect the cartridge sleeve and/or the cap. In some exemplary embodiments, during shooting, when a firing pin strikes the primer of the cartridge through a hole in the cap, a resulting explosion may deform the barrel and/or the cap. In some cases, after firing, the deformation may make it impossible to detach the barrel from the cap, requiring the user to replace the entire barrel sub-system to continue operating using a different barrel sub-system.

In some exemplary embodiments, in order to address the deformation problem, the disposable barrel may be replaced between firing operations. For example, the entire assembly of the disposable barrel, including the cartridge sleeve, the cartridge, and the cap, may be replaced after a first firing operation and before a second subsequent firing operation. In some cases, the ability to replace the barrel between firing operations may cause the barrel to constitute a 'disposable' barrel.

In some exemplary embodiments, ammunition may be loaded into the cartridge sleeve, and subsequently, the cartridge sleeve may be secured to the cap. In some exemplary embodiments, the disposable barrel may be secured to the aerial firing module, such as by securing its cap to the aerial firing module. In some exemplary embodiments, after the disposable barrel is loaded and secured to the aerial firing module, the barrel may be used for a single firing operation. In some exemplary embodiments, a cartridge may be fired from the disposable barrel as a single shot, in which one or more pellets are fired, after which the disposable barrel may be replaced.

In some exemplary embodiments, the attachment between the aerial firing module and the disposable barrel may be configured to enable the aerial firing module to withstand the necessary pressures, e.g., by selecting a securing mechanism that can withstand the shooting pressure. In some exemplary embodiments, the attachment between the cartridge sleeve and the cap of the disposable barrel may be configured to withstand the shooting pressure, without detaching during the firing operation.

In some exemplary embodiments, although the entire assembly of the disposable barrel may be replaceable between firing operations, the aerial firing module itself (excluding the barrel) may be reusable, e.g., not disposable. For example, the remaining body of the aerial firing module may be durable and sustainable, enable reuse for a plurality of firing operations. In some exemplary embodiments, reusing the remaining aerial firing module may reduce operational costs, since users may be enabled to utilize the aerial firing module repeatedly rather than purchasing new equipment for each firing operation. In some exemplary embodiments, reusing the remaining aerial firing module may ease the operation thereof, as users may not be required to detach and re-attach the aerial firing module to the drone every firing operation.

Another technical solution of the disclosed subject matter is to use the cap of the barrel as a disposable breach block (also referred to as 'breech face'). In some exemplary embodiments, the cap may serve as a disposable breach block. The cap may prevent the escape of gases from the chamber. In some exemplary embodiments, a breech block may comprise a rear part of a barrel where cartridges are loaded and fired. In some exemplary embodiments, a breech block may be configured to provide a surface against which the cartridge may be pressed, ensuring proper alignment and security during firing.

In some exemplary embodiments, in order to further reduce the weight of the shooting system, the cap, acting as a breech block, may be a disposable cap. The disposable cap need not withstand the forces applied thereon during the firing operations and may be deformed thereby. In some cases, making the cap disposable may enable to utilize highly effective fastening mechanisms between the cap and the cartridge sleeve, which may not necessarily be feasible for permanent breech blocks.

In some exemplary embodiments, the enhanced sealing of the barrel, preventing gas from escaping the barrel, may ensure that the propellant gases are directed outwards when a projectile is fired, away from the aerial firing module and towards the muzzle of the barrel. For example, the embedded breech block may act as a counterforce against the recoil, causing the expansion force and gases to be channeled forward.

In some exemplary embodiments, the cap may be designed to contain the explosive force generated during firing and to withstand the high pressures created during the shooting process, which may be essential for the safe operation of the barrel and the durability of the drone and add-on aerial firing module.

In some exemplary embodiments, designing the breech block as a disposable cap may enable to construct the cap from lighter, simpler, and more affordable materials compared to external breech blocks. For example, while typical breech blocks may be required to withstand pressure from a large number of firing operations (e.g., more than a thousand), the disposable cap may be required to withstand pressure from a lesser number of firing operations (e.g., a single firing operation).

In some exemplary embodiments, the remaining aerial firing module, excluding the disposable barrel, may comprise a body of the aerial firing module, an engine (e.g., for activating the firing pin), a mount that is attachable to the drone (e.g., one or more mounting frames attachable to the drone), a mount that is attachable to the barrel, a firing mechanism including a firing pin, or the like. In some cases, the remaining aerial firing module may be absent, or exclude, the breach block.

Yet another technical solution of the disclosed subject matter is to reduce the overall weight of the aerial firing module by shortening the barrel of the aerial firing module.

In some exemplary embodiments, barrels may be designed to direct the trajectory of a projectile out of a firearm. For example, a barrel may be designed to direct the trajectory of a projectile out of the aerial firing module. In some exemplary embodiments, barrels may comprise a chamber, such as a blast chamber. In some exemplary embodiments, the chamber may comprise a hollow cylinder tube in which the cartridge is inserted and held in place before firing. In some exemplary embodiments, the chamber may support the cartridge during firing, ensuring it is in the proper position to be struck by the firing pin, igniting the primer of the cartridge and propelling the projectile out of the chamber.

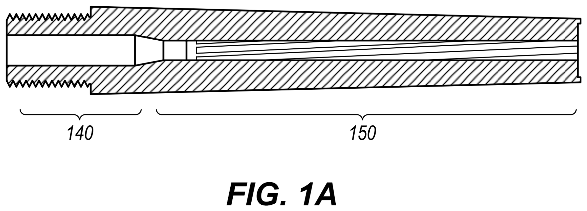

In some exemplary embodiments, typical barrels may comprise a long, cylindrical, rifled or unrifled tube through which a projectile is propelled when the firearm is discharged from the chamber. Such typical barrels comprise at least one section of the tube that extends outward beyond the blast chamber, e.g., to the direction of the muzzle. For example, a rear end of the barrel's tube may comprise the blast chamber, while the remaining tube may be external to the chamber. For example, Figure 1A depicts a barrel that includes Chamber 140 in its rear end, and Extension 150 as a barrel extension that extends outward beyond the chamber to the direction of the muzzle. For example, the term 'barrel extension' may refer to a barrel portion that excludes the chamber.

In some exemplary embodiments, in order to further reduce an overall weight of the aerial firing module, the barrel may be designed to exclude the barrel extension. In some exemplary embodiments, in contrast to typical barrels, such as the barrel of Figure 1A, the disclosed subject matter provides a disposable short barrel that does not include any extension to the barrel's tube. In some exemplary embodiments, the disposable barrel may comprise a short barrel that only includes the chamber of the cartridge, from which the cartridge is propelled and discharged directly. In some exemplary embodiments, the disposable barrel may include the chamber, the chamber being used for housing the cartridge before a firing operation and during the firing operation.

In some exemplary embodiments, the disposable barrel may not comprise any barrel extension that extends beyond the chamber. For example, all portions of the disposable barrel may be part of a chamber, and no portion of the barrel may be external to the chamber. As another example, all portions of the disposable barrel may be used for housing the cartridge before a firing operation and during the firing operation. In other cases, the disposable barrel may or may not comprise a short barrel extension that extends outward beyond the chamber.

In some exemplary embodiments, the disposable barrel may be intended for short distance ranges, such as the near-lethal range. In some exemplary embodiments, firing operations in the near-lethal range may not necessitate a barrel extension. For example, barrel extensions for the chamber may be useful for directing the trajectory of a projectile in longer distance scenarios, in which the distance between the drone and the target is greater than the near-lethal range. Within the near-lethal range, the blast chamber itself may be sufficient for firing effectively at a target, without the barrel extension. In some exemplary embodiments, excluding the barrel extension may not adversely affect the accuracy of the barrel's fire in short distance scenarios, e.g., beyond a threshold.

In some exemplary embodiments, by excluding the barrel extension, the disposable barrel may be coextensive with the chamber. In some exemplary embodiments, the disposable barrel may be manufactured to comprise a cartridge sleeve, comprising a hollow tube that can be fitted around a cartridge, and a cap, which may be securable and/or fitted to the cartridge sleeve. In some exemplary embodiments, the disposable barrel may be constructed to accommodate various types of cartridges, such as slugs, buckshot, birdshot, rubber bullets, and more. In some exemplary embodiments, the type of cartridge may be selected according to the user's needs, the fighting scenarios, or the like.

In some exemplary embodiments, the cap may be designed with a larger diameter that the cartridge sleeve, in order to ensure that the entire assembly of the barrel remains securely mounted on the aerial firing module during operation. By having a larger diameter, the assembly may provide a snug fit that prevents any unintended dislodgement. In some exemplary embodiments, the resulting disposable barrel may be lightweight, effective and safe to use.

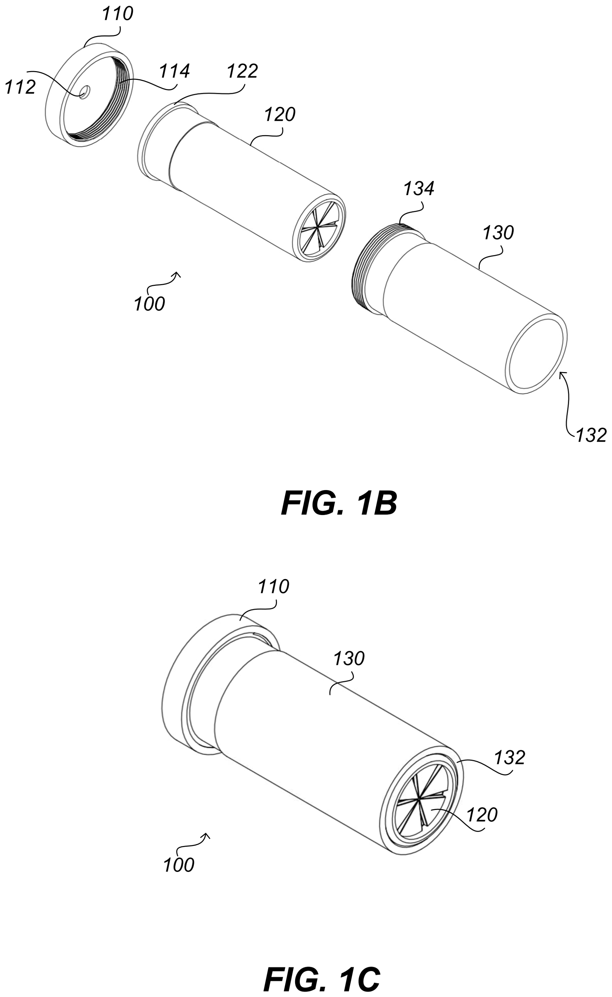

Referring now to Figure 1B showing an exemplary exploded view of a barrel, in accordance with some exemplary embodiments of the disclosed subject matter.

In some exemplary embodiments, the barrel of Figure 1B may comprise a disposable barrel in accordance with some exemplary embodiments of the disclosed subject matter. As depicted in Figure 1B, Barrel 100 is composed of a Cap 110, a Cartridge 120, and a Cartridge Sleeve 130. In some exemplary embodiments, Cap 110 and Cartridge Sleeve 130 may be integral components of Barrel 100, while Cartridge 120 may be separate therefrom. For example, Cartridge 120 may be external to the aerial firing module (e.g., potentially obtained from a third party), while Cap 110 and Cartridge Sleeve 130 may be included in the aerial firing module. In other cases, Cartridge 120 may be included in the aerial firing module. In other cases, Cap 110 and Cartridge Sleeve 130 may not be included in the aerial firing module, and may be manufactured and provided separately.

In some exemplary embodiments, Cap 110 may comprise a Hole 112, in order to enable a firing pin of the aerial firing module to strike the primer of Cartridge 120 through Hole 112.

In some exemplary embodiments, Cap 110 may be designed to function as a breach block. For example, Cap 110 may be structured to close Cartridge Sleeve 130 in order to prevent the escape of gases, and may be structured to ensure that the propellant gases are directed outwards, towards Muzzle 132.

In some exemplary embodiments, Cartridge Sleeve 130 may be attachable to Cap 110 through a fastening mechanism. In some cases, Cartridge Sleeve 130 may be attachable to Cap 110 through threaded ends of Cartridge Sleeve 130. For example, Component 134 may be threaded into Component 114 of Cap 110, or vice versa, providing an easy manner of attaching Cap 110 to the Cartridge Sleeve 130. In other cases, any other fastening mechanisms may be used to secure Cartridge Sleeve 130 to Cap 110. For example, fastening mechanisms may be used such as a protrusion lock mechanism, in which latches and bulges are secured together (e.g., Cap 110 having latches and Cartridge Sleeve 130 having matching bulges, or vice versa). As another example, fastening mechanisms may comprise clamping mechanisms, panel mount connectors, bayonet couplings, bayonet-style locking connectors, snap-fit connections, press-fit couplings, detachable pins and cotter pins, interlocking joints, magnetic coupling, quick-connect fittings, quick-release, sliding rails, universal mounting plates, straps, quick-release, bolted connections, custom brackets, dovetails, or the like.

In some exemplary embodiments, the rim of Cap 110 may be designed to have a diameter that is larger than the diameter of Muzzle 132, and the Rear Area 122 of Cartridge 120 may also have a diameter that is larger than the diameter of Muzzle 132. For example, this may ensure that Cartridge 120 is stable in Cartridge Sleeve 130 and does not glide out from its position, e.g., out of Muzzle 132.

In some exemplary embodiments, Cartridge 120 may be configured to be inserted into Cartridge Sleeve 130, and subsequently, Component 134 of Cartridge Sleeve 130 may be configured to be secured to Component 114 of Cap 110. In some cases, such as in the scenario of Figure 1B, since Rear Area 122 of Cartridge 120 may have a greater diameter than Muzzle 132, it may be impossible to insert Cartridge 120 into Muzzle 132. The Cartridge 120 may be inserted into Cartridge Sleeve 130 before Cartridge Sleeve 130 is coupled to Cap 110, such as via the slot of Component 134, ensuring a proper fit. In other cases (not depicted), any other order may be used to insert Cartridge 120 into Cartridge Sleeve 130 and to secure Cartridge 120 to Cartridge Sleeve 130.

In some cases, instead of manually inserting Cartridge 120 into Cartridge Sleeve 130 every firing operation, each Barrel 100 may comprise a barrel that is a-prior welded, in which Cartridge 120 is welded with Cartridge Sleeve 130. For example, the welding process may comprise ensuring that Cartridge 120 is secured to Cartridge Sleeve 130, that Cartridge Sleeve 130 is secured to Cap 110, or the like. For example, a buffer may be inserted, after Cartridge 120 is inserted to Cartridge Sleeve 130, to prevent Cartridge 120 from gliding out from Cartridge Sleeve 130. The buffer may be manufactured such that it does not prevent Cartridge 120 from being fired, e.g., that the buffer cannot withstand the power of the propellant gases. In other cases, instead of a buffer, the welding process may add material around Cartridge 120 to ensure snug fit of the Cartridge 120 within the Cartridge Sleeve 130, preventing any gliding.

As another example, instead of welding Cartridge 120 with Cartridge Sleeve 130, an adhesive bonding may be used to attach Cartridge 120 to Cartridge Sleeve 130, such as by using substances like epoxy resins. According to this example, adhesive bonding may be applied in case it does not prevent Cartridge 120 from being fired, e.g., in case the adhesive bonding cannot withstand the power of the propellant gases.

In some exemplary embodiments, Barrel 100 may be disposable. For example, every one or more firing operations, Barrel 100 may be configured to be detached from the aerial firing module, by a user, and a new barrel may be secured to the aerial firing module.

In some exemplary embodiments, after Cartridge Sleeve 130 is secured to Cap 110, with Cartridge Sleeve 130 housing Cartridge 120, the assembled barrel (Barrel 100) may be mounted and/or secured to the aerial firing module. For example, the aerial firing module may comprise a mount or base that enables to securely accommodate Barrel 100, or the like. For example, the aerial firing module may comprise slots that match in size and shape to protrusions of Cap 110 and Cartridge Sleeve 130, respectively.

In some exemplary embodiments, a securing mechanism may enable to secure Barrel 100 to the aerial firing module. For example, the securing mechanism may be configured to ensure that Barrel 100 is tightly secured to the aerial firing module, achieving a snug fit or an equivalent connection. For example, the aerial firing module may comprise a cavity that matches in size, diameter, and shape to Barrel 100. According to this example, the cavity may comprise a larger cavity portion for Cap 110, and a smaller cavity portion for Cartridge Sleeve 130.

In some cases, the securing mechanism may employ any other means to secure Barrel 100 to the aerial firing module. For example, the securing mechanism may employ threaded coupling means, enabling Barrel 100 and the aerial firing module to be screwed together. As another example, the securing mechanism may comprise a protrusion lock mechanism, in which latches and bulges are secured together (e.g., Cap 110 having latches and the add-on aerial firing module having matching bulges, or vice versa). As another example, the securing mechanism may employ means such as clamping mechanisms, bayonet-style locking connectors, bayonet couplings, panel mount connectors, snap-fit connections, press-fit couplings, detachable pins and cotter pins, interlocking joints, magnetic coupling, quick-connect fittings, quick-release, sliding rails, universal mounting plates, straps, or the like.

In some exemplary embodiments, enabling to replace Barrel 100 may relax the durability requirements from Barrel 100, and may enable to manufacture Barrel 100 from lightweight material and/or with thin walls, thereby reducing the weight of Barrel 100. In some exemplary embodiments, integrating Cap 110 into Barrel 100, as a disposable breach block, may enable to construct Cap 110 from lighter, simpler, and more affordable materials such as aluminum, compared to systems with an external breech block. For example, Cartridge Sleeve 130 and/or Cap 110 may be constructed to have walls that are thin compared to walls of typical barrels, such as having a width below 3 mm, below 2 mm, below 1 mm, below 0.75 mm, below 0.5 mm, or the like.

As another example, Cartridge Sleeve 130 and/or Cap 110 may be constructed from materials that are lightweight compared to materials of typical barrels. In some exemplary embodiments, Cartridge Sleeve 130 and/or Cap 110 may be constructed from lightweight materials such as stainless steel, carbon steel, aluminum, chromoly steel, titanium, carbon fiber, nickel alloys, ceramic-lined barrels, composite materials, printed plastic, or the like. In some cases, Cartridge Sleeve 130 and Cap 110 may or may not be composed of the same material. For example, Cartridge Sleeve 130 may be composed of stainless steel, while Cap 110 may be composed of aluminum. As another example, Cartridge Sleeve 130 and Cap 110 may be composed of a same material, e.g., stainless steel. In some cases, one or more materials for Barrel 100 may be selected based on the target usage, fighting scenario, type of cartridge, or the like.

For example, Barrel 100 may be manufactured from aluminum for less wear-intensive applications, such as air rifles or lightweight firearms. In such cases, internal coatings or liners may or may not be used, such as to overcome the relatively low wear-resistant of aluminum. As another example, materials such as chromoly steel, carbon fiber (steel barrels wrapped in carbon fiber), and titanium may provide an advantageous balance, as they may be both highly wear-resistant and lighter than stainless steel, titanium being also corrosion-resistant. As another example, materials such as nickel alloys may be selected for situations that demand extreme heat and corrosion resistance, such as in aerospace applications or specialized high-pressure barrels. As another example, materials such as ceramic-lined barrels, which have ceramic linings applied to the inside of steel barrels, may be selected for situations that demand high heat resistance and wear over time, e.g., for industrial applications such as combustion chambers or experimental firearms. As another example, materials such as composite materials, which merge metals with ceramics or carbon fibers, may be selected for situations in which weight reduction and heat dissipation are critical factors. As another example, materials such as carbon steel or stainless steel may be selected for situations that require high durability and strength, and in some cases may be heat-treated to improve hardness.

In some exemplary embodiments, reducing the weight of Barrel 100 may cause the weight of the entire aerial firing module to be reduced, at least since Barrel 100 may constitute a component of the aerial firing module. In some exemplary embodiments, reducing the weight of Barrel 100 may come at the expense of its durability. For example, reduced wall thickness, or lightweight materials, may result with Barrel 100 bending and becoming unusable after one or more firing operations. In some cases, during shooting, when the firing pin of the aerial firing module strikes the primer of Cartridge 120 through a hole in Cap 110, the explosion may deform Cartridge Sleeve 130 and/or Cap 110, making it in some cases impossible to open Barrel 100. In some cases, firing operations may release gases that can cause the shape of Cartridge Sleeve 130 to change, e.g., to swell in certain portions, to shrink in certain places, or the like. In some cases, firing operations may release gases that can cause the shape of Cap 110 to change, e.g., to swell in certain portions, to shrink in certain places, or the like, which may adversely affect the function of the firing mechanism and/or the fastening mechanism between Cartridge Sleeve 130 and Cap 110. In some cases, the shape of Barrel 100 may be deformed due to an explosive force of the firing operation, a recoil force, or the like. In some cases, following the firing operation, detaching Cap 110 from Cartridge Sleeve 130 using the threading or other fastening means may be not be possible due to the deformation of either Cap 110 or Cartridge Sleeve 130, or both.

In some exemplary embodiments, in order to address the deformation, the assembly of Barrel 100 may be replaced between firing operations. For example, the entire assembly of Barrel 100, including Cartridge Sleeve 130, Cartridge 120, and Cap 110, may be replaced with a different barrel between one or more subsequent firing operation. In some cases, in case the drone with the aerial firing module is operated without performing a firing operation, such as in case an enemy is not encountered, Barrel 100 may remain without being replaced, e.g., until a firing operation is performed.

In some exemplary embodiments, the weight of Barrel 100 may be further reduced by shortening the length of Barrel 100 compared to typical barrels. For example, the length of Barrel 100 may comprise a distance between an external side of Cap 110 (e.g., an opposite side than Cartridge Sleeve 130, when attached to Cap 110) and Muzzle 132, without any barrel extension. In some exemplary embodiments, the length of Barrel 100 may be reduced by excluding a barrel extension from Barrel 100, and including only the chamber. In some exemplary embodiments, the length of Barrel 100 may coextend with the length of the chamber, and may be constructed to have a length that is less than 6 inches, less than 5 inches, less than 4 inches, less than 3 inches, or the like. In some exemplary embodiments, the length of Barrel 100 may be adjusted to match a length of a target cartridge. For example, the length of Barrel 100 may range from a length of 1 inch to 6 inches, from a length of 1 inch to 5 inches, from a length of 2 inch to 4 inches, from a length of 2 inch to 3.5 inches, or the like, e.g., according to dimensions of the cartridge. For example, the length of Barrel 100 may correspond to the distance between an external side of Cap 110 and Muzzle 132, and may be 2 inches, 2.5 inches, 3 inches, 3.5 inches, or the like.

In some exemplary embodiments, the gauge, or diameter, of the interior of Barrel 100, e.g., the chamber bore, may vary. In some cases, the gauge may range from .775 inches (19.69 millimeters (mm)) for a 10-gauge to .410 inches (10.41 mm) for a .410 bore. In other cases, the gauge may be larger, e.g., more than .775 inches. In other cases, the gauge may be smaller, e.g., less than .410 inches. In some exemplary embodiments, the chamber bore may correspond to the internal diameter of Cartridge Sleeve 130. In some exemplary embodiments, the gauge may impact the type and size of shot shells used, the effective range of the aerial firing module, and the pattern of the shot upon firing.

In some exemplary embodiments, the weight reduction steps, including using thin walls, lightweight material, a disposable breach block, and/or excluding a barrel extension, may result with the weight of Barrel 100, excluding Cartridge 120, ranging from 20-60 grams, from 10-70 grams, or the like, e.g., depending on the materials used, the thinness of the walls, or the like. For example, the weight of Barrel 100 may be less than 40 grams, less than 30 grams, or the like. As another example, constructing Cartridge Sleeve 130 from titanium and constructing Cap 110 from stainless-steel may result with Barrel 100 weighing less than 30 grams.

In some exemplary embodiments, the weight of Barrel 100 excluding Cartridge 120 may be denoted as $W_B$, the weight of Cap 110 may be denoted as $W_C$, and the weight of Cartridge Sleeve 130 may be denoted as $W_S$. According to this example, the weight of Barrel 100 may be formulated, in some cases, according to the following equation:

$$W_B = W_C + W_S \qquad (1)$$

In some exemplary embodiments, in order to calculate the overall weight of Barrel 100, incorporating the weight of Cartridge 120, the following equation may be used:

$$W_O = W_B + W_P \qquad (2)$$

In which $W_O$ denotes the overall weight, $W_P$ denotes the weight of Cartridge 120 (e.g., the projectile), and $W_B$ denotes the weight calculated in Equation 1.

In some exemplary embodiments, the weight of Cartridge 120, denoted as $W_P$, may be calculated based on the selection of a cartridge type, affecting the weight of the components from which Cartridge 120 is built. In some exemplary embodiments, different types of cartridges may have different weights, according to weights of their casing, shot loads, primer, and powder. In some cases, the weight of Cartridge 120 may range between 12-100 grams. In some cases, the weight of Cartridge 120 may range between 5-130 grams. In some cases, the weight of Cartridge 120 may range between 5-140 grams. For example, for a 12-gauge birdshot, 1 oz loads may have a total shell weight ranging from 42 to 57 grams, including a shot load of 28 grams. As another example, a 10-gauge buckshot, (00, 18 pellets) may weigh between 85 and 100 grams, including a shot load of 68 grams. As another example, a .410 slug (87.5 grains) may weigh between 12 and 15 grams, including a shot load of 5.67. In other cases, the weight of Cartridge 120 may be less than 12 grams, e.g., 10 grams, 5 grams, or the like.

In some exemplary embodiments, the weight of Cartridge 120, denoted as $W_P$, may be affected by the length of Cartridge 120. In some cases, the length of Cartridge 120 may range between 2.5 and 3.5 inches. In some cases, the length of Cartridge 120 may range between 1.5 and 4.5 inches. In some exemplary embodiments, the length of Barrel 100 may coextend with the fired length of Cartridge 120, corresponding to the overall length of the shell after it has been fired. In some exemplary embodiments, the dimensions of Barrel 100 may match the case base length of Cartridge 120, to ensure proper seating and alignment of Cartridge 120.

In some exemplary embodiments, the rim thickness, corresponding to the thickness of the rim of Rear Area 122, may have a length of 0.04 inches, 0.05 inches, 0.06 inches, 0.07 inches or the like. In some exemplary embodiments, Rear Area 122 may aid in extraction from the shotgun's chamber, as it may provide a solid surface for the extractor to grip during the process of removing the spent shell. In some exemplary embodiments, the rim diameter, corresponding to the diameter of the outer edge of the rim of Rear Area 122, may have a length of 0.75 inches, 0.757 inches, 0.759 inches, or the like. In some exemplary embodiments, the remaining diameters of Cartridge 120 may be lesser than the diameter of Rear Area 122, e.g., the case base diameter may have a length of 0.689 inches, the mouth diameter corresponding to the diameter at the open end of the shell may have a length of 0.678 inches, or the like. In other cases, any other cartridges with any other thickness and/or diameters may be used.

In some exemplary embodiments, in order to calculate the overall weight of Barrel 100, denoted $W_O$, Equation 2 may be applied. In some exemplary embodiments, in case the weight $W_B$ ranges from 20-60 grams, and the weight $W_P$ ranges from 12-100 grams, the overall weight $W_O$ may range from 32-160 grams, e.g., according to Equation 2. In other cases, in case the weight $W_B$ ranges from 10-70 grams, and the weight $W_P$ ranges from 12-100 grams, the overall weight $W_O$ may range from 22-170 grams, e.g., according to Equation 2.

In some exemplary embodiments, the weight of the entire aerial firing module may depend on the weight of its subcomponents. For example, the overall weight of the aerial firing module may be calculated according to the following equation:

$$W_{Add-on} = W_{Body} + W_O \qquad (3)$$

In which $W_O$ denotes the overall weight of the barrel as calculated by Equation 2, $W_{Body}$ denotes the weight of the body of the aerial firing module (e.g., including the engine, a mount for the drone, a mount for the barrel, and a firing mechanism) excluding the barrel, and $W_{Add-on}$ denotes the overall weight of the add-on aerial firing module. In case $W_O$ ranges from 32-160 grams, and $W_{Body}$ ranges from 108-140, then $W_{Add-on}$ may range from 140-300 grams. In case $W_O$ ranges from 22-170 grams, and $W_{Body}$ ranges from 108-140, then $W_{Add-on}$ may range from 130-310 grams. For example, $W_{Add-on}$ may comprise 150 grams, 160 grams, 170 grams, or the like.

In some exemplary embodiments, the aerial firing module may be constructed to have a weight that complies with a carrying capacity of a micro drone, such as a carrying capacity of 150 grams, 200 grams, 250 grams, or the like. In some cases, the carrying capacity of a drone may refer to the drone's capacity to carry payloads without the loads adversely affecting its ability to fly, maneuver as intended and allow effective flight duration.

Referring now to Figure 1C showing an exemplary assembled view of a barrel, in accordance with some exemplary embodiments of the disclosed subject matter.

In some exemplary embodiments, Figure 1C may depict Barrel 100, in an assembled mode in which Cap 110, Cartridge 120, and Cartridge Sleeve 130 are assembled together. For example, Cartridge 120 may be inserted into Cartridge Sleeve 130, and Cartridge Sleeve 130 may be threaded into Cap 110.

In some exemplary embodiments, as depicted in Figure 1C, Barrel 100 coextends with Cartridge 120, having a length that corresponds to a chamber of Cartridge 120, without a barrel extension. In some exemplary embodiments, Cap 110 may have a wider rim than Cartridge Sleeve 130, e.g., by 5 percent, 10 percent, 20 percent, 30 percent, or the like.

One technical effect of utilizing the disclosed subject matter is to provide an aerial firing module that complies with extremely low carrying capacities of small drones such as micro drones. Although compliance with carrying capacities of micro drones such as capacities of 200 grams or 150 grams may seem infeasible, the disclosed subject matter provides an aerial firing module that complies with such constraints by making the barrel disposable, using thin lightweight material for the barrel components, using a disposable breach block, providing the barrel without a barrel extension, or by any combination thereof. In some exemplary embodiments, the reduction in the barrel's weight may reduce the overall weight of the aerial firing module, enabling compliance with the carrying capacities of micro drones.

For example, the disclosed subject matter enables to construct an aerial firing module of 200 grams, 170 grams, 160 grams, 150 grams, 140 grams, 130 grams, or the like, which may be carriable by many micro drone types.

Another technical effect of utilizing the disclosed subject matter is providing a disposable barrel with reduced weight. For example, the disclosed subject matter enables to construct a disposable barrel with a weight ranging from 32-160 grams, from 22-170 grams, or the like, which may be significantly lesser than typical barrels.

Yet another technical effect of utilizing the disclosed subject matter is to provide an add-on aerial firing module that is attachable to commercially available drones such as micro drones, e.g., using one or more mounting mechanisms. In some exemplary embodiments, the disclosed add-on aerial firing module may be designed to be attachable to and detachable from commercially available drones such as a DJI Avata™ drone, Parrot Anafi™ USA, or the like, in an easy straightforward manner.

In some exemplary embodiments, by leveraging existing drone platforms, many of which are inexpensive and possess advanced flight performance and precision, the need for designing new drones with built-in firing mechanisms is eliminated, resulting in significant reductions in research, development, and production costs. In some exemplary embodiments, this modular approach enables to upgrade existing drones without the expense of manufacturing entirely new drone systems, further driving down the resource and time consumption.

Yet another technical effect of utilizing the disclosed subject matter is to provide an aerial firing module that facilitates lethality in indoor environments, particularly within near-lethal ranges at which a projectile can cause significant harm or lethality to a target. The disclosed aerial firing module, although using a disposable lightweight barrel, provides the drone with efficient lethality and firing capabilities that can be used in complex military operations. The exclusion of a barrel extension does not adversely affect the firing capabilities of the barrel, due to the disclosed subject matter being intended to be used in near-lethal ranges.

Yet another effect of utilizing the disclosed subject matter is to provide a disposable barrel that can be replaced after a firing operation. The disposability of the barrel enables to compromise the durability of the barrel, as it is not required to be durable for multiple firing operations. Due to the reduced durability constraints, the barrel's dimensions and weight may be reduced to extremely low levels by using lightweight thin materials for constructing the barrel's sub-components, excluding a barrel extension to the chamber, integrating the breach block as part of the disposable barrel, or the like.

Yet another effect of utilizing the disclosed subject matter is ensuring that the aerial firing module and the barrel can withstand the recoil from firing a cartridge without disrupting the drone's balance or maneuverability. In some exemplary embodiments, integrating the breech block into the barrel as a disposable cap may prevent gas from escaping the barrel backward. By keeping gases from escaping backward, the breech block maximizes pressure pushing the bullet forward, and stabilizes the aerial firing module during firing. For example, ensuring that the propellant gases are directed outwards when a projectile is fired, may cause the breech block to channel the expansion force and gases forward, enabling the breech block to effectively act as a counterforce against the recoil. In some exemplary embodiments, the disposable cap may be designed to contain the explosive force generated during firing and to withstand the high pressures created during the shooting process, which may be essential for the safe operation of the barrel and the durability of the drone and aerial firing module.

In some cases, integrating the breech block into the barrel, as a disposable cap, may enhance the firing power of the barrel, since the breech block may provide a better sealing of the barrel when embedded therein. For example, making the cap disposable may enable to utilize highly effective fastening mechanisms between the cap and the cartridge sleeve, which may not necessarily be feasible for permanent breech blocks.

In some cases, integrating the breach block as part of the disposable barrel enables to construct the breach block from lighter, simpler, and more affordable materials compared to systems with an external breech block.

Yet another effect of utilizing the disclosed subject matter is providing a disposable barrel that can be used for various tactical scenarios. For example, the disclosed barrel may be used for rapid entry scenarios, in which specialized tactical entry technique use explosives to create openings, for quick access to structures. As another example, the disclosed barrel may be used for non-lethal scenarios, in which engagements are aimed at incapacitating targets without causing permanent harm, such as using tasers or rubber bullets. As another example, the disclosed barrel may be used for lethal scenarios, in which engagements are aimed at inflicting serious injury or death, typically reserved for situations involving imminent threats. As another example, the disclosed barrel may be used for disarming of traps or explosives, in which engagements are aimed at neutralizing threats without causing harm.

Yet another effect of utilizing the disclosed subject matter is to ensure that the barrel is securely mounted to the add-on aerial firing module, and that the add-on aerial firing module is securely mounted to the drone. In some exemplary embodiments, the disclosed subject matter provides an add-on aerial firing module that can be easily attached and detached from a drone, with a disposable barrel that can be easily attached and detached from the add-on aerial firing module. In some exemplary embodiments, the disclosed subject matter enables to easily replace used barrels with new disposable barrels, such as via threaded coupling means. In some exemplary embodiments, the disclosed subject matter provides an add-on aerial firing module with a user-friendly, intuitive and UI of with enhanced human-machine connection, which can be easily operated in the battle field and in military zones.

The disclosed subject matter may provide for one or more technical improvements over any pre-existing technique and any technique that has previously become routine or conventional in the art. Additional technical problem, solution and effects may be apparent to a person of ordinary skill in the art in view of the present disclosure.

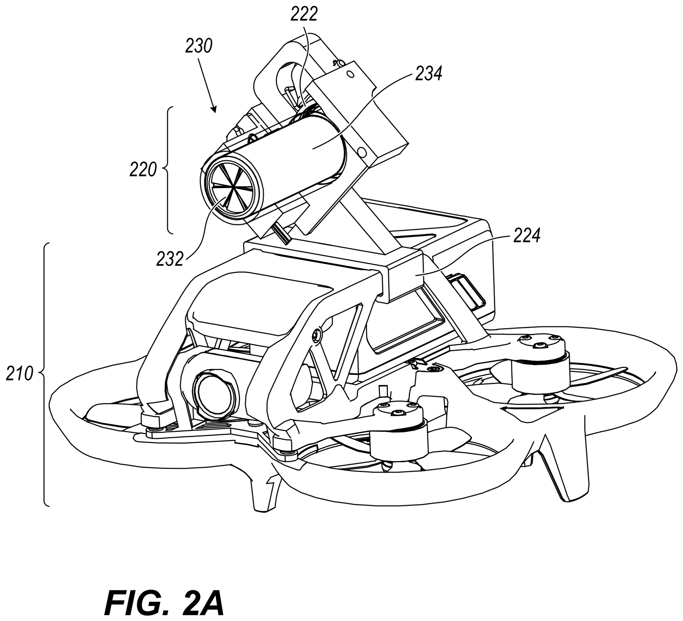

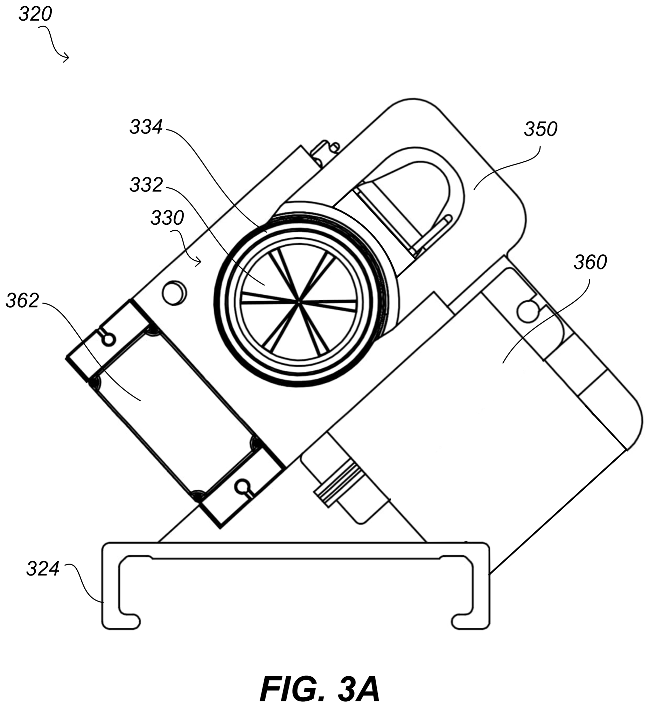

Figures 2A-2G and 3A-3F show an example of an add-on aerial firing module. However, the disclosed subject matter is not limited to an add-on aerial firing module and the same principals and features may be implemented in a non-add-on aerial firing module that is permanently attached to the drone.

Referring now to Figure 2A showing an exemplary perspective front-side view of an add-on aerial firing module mounted on a drone, in accordance with some exemplary embodiments of the disclosed subject matter.

As depicted in Figure 2A, Drone 210 may comprise a drone such as a micro drone. In some exemplary embodiments, Drone 210 may be selected in case it is a commercially available drone, such as a micro drone, a palm-sized drone, a FPV drone, a combination thereof, or the like. In some cases, Drone 210 may be selected in case it supports a turtle mode feature. For example, some FPV drones may support a turtle mode feature, which allows the drone to automatically flip itself upside down. For example, if the drone crashed and landed upside down, the turtle mode may enable the drone (in response to a user instruction via the remote control) to flip itself back upright such as by reversing the direction of the propellers. In other cases, Drone 210 may be selected in any other manner.

In some exemplary embodiments, an Add-On Aerial Firing Module 220 may be designed to be mountable atop Drone 210, to a bottom of Drone 210, or the like. In some exemplary embodiments, Add-On Aerial Firing Module 220 may comprise Frame 224, configured to secure Add-On Aerial Firing Module 220 to Drone 210.

In some exemplary embodiments, in addition to securing Add-On Aerial Firing Module 220 to Drone 210, Add-On Aerial Firing Module 220 may be secured to a disposable barrel such as Barrel 230. In some exemplary embodiments, Add-On Aerial Firing Module 220 may comprise a mount, such as Mount 222, for securing Barrel 230 to Add-On Aerial Firing Module 220.

In some exemplary embodiments, Barrel 230 may be a component of Add-On Aerial Firing Module 220 that can be attached and detached therefrom. In some exemplary embodiments, Barrel 230 may comprise a Cartridge Sleeve 234, corresponding to Cartridge Sleeve 130 (Figure 1B), and a Cartridge 232 corresponding to Cartridge 120 (Figure 1B). The cap of Barrel 230 (not visible) may be placed inside Add-On Aerial Firing Module 220, e.g., within Mount 222.

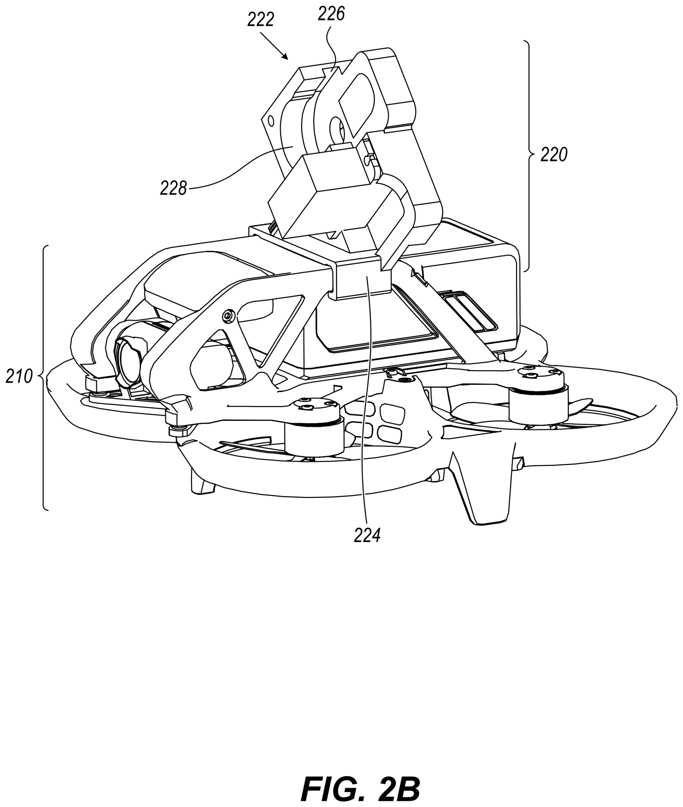

Referring now to Figure 2B showing an exemplary perspective rear-side view of an add-on aerial firing module mounted on a drone, in accordance with some exemplary embodiments of the disclosed subject matter.

In some exemplary embodiments, Figure 2B depicts Add-On Aerial Firing Module 220 mounted on Drone 210, when Barrel 230 is detached from Add-On Aerial Firing Module 220. In some exemplary embodiments, Barrel 230 may be detached from Add-On Aerial Firing Module 220 after a firing operation is performed, before a firing operation is performed, or the like.

In some exemplary embodiments, Add-On Aerial Firing Module 220 may comprise Frame 224, configured to secure Add-On Aerial Firing Module 220 to Drone 210. Frame 224 may be designed to enable users to easily secure Add-On Aerial Firing Module 220 to Drone 210, to easily disconnect Add-On Aerial Firing Module 220 from Drone 210, and to easily reconnect Add-On Aerial Firing Module 220 to a different drone. For example, Frame 224 may be designed to enable users to secure Add-On Aerial Firing Module 220 to Drone 210 using a single pushing movement, a single gesture, a quick snap-in motion, a sliding action, a simple click-in step, a press-and-lock maneuver, a turn-and-secure twist, a pull-to-release movement, a set of one or more simple actions, or the like.

In some cases, Frame 224 may comprise one or more mounting frames, as depicted in Frame 224 of Figure 2A, which may be designed to mechanically join Add-On Aerial Firing Module 220 to Drone 210. For example, a mounting frame of Frame 224 may be designed to fasten Add-On Aerial Firing Module 220 to Drone 210, to secure them tightly to one another, to lock Add-On Aerial Firing Module 220 in place, to clamp down Add-On Aerial Firing Module 220 to Drone 210, or the like. This type of connection may be beneficial for ease of use and reliability of Add-On Aerial Firing Module 220, especially where frequent swaps are required during dynamic operations.

In some exemplary embodiments, Frame 224 may utilize one or more mounting mechanisms for securing Add-On Aerial Firing Module 220 to a selected drone. In some cases, the mounting mechanism may comprise threaded coupling means, clamping mechanisms such as compression clamps that secure two parts by applying pressure without threading, bayonet couplings, bayonet-style locking connectors (e.g., in which one component has pins or protrusions that fit into slots or grooves on the other component, and, once inserted, the male part is twisted, and the pins lock into place within the grooves), bolted connections, custom brackets, panel mount connectors, snap-fit connections, press-fit couplings such as interference fits and shrink fittings, detachable pins and cotter pins, interlocking joints such as tongue and groove or dovetail joints, magnetic coupling, quick-connect fittings, quick-release, sliding rails for a snug fit, dovetails, universal mounting plates, straps, or any other mounting mechanism that enables to secure Add-On Aerial Firing Module 220 to the drone platform. In some cases, the mounting mechanism may be used for connecting, mounting, securing, attaching, locking, fastening, affixing, or the like, Add-On Aerial Firing Module 220 to a drone platform such as Drone 210.

In some cases, a user may be enabled to secure Add-On Aerial Firing Module 220 to Drone 210 by placing the mounting frame of Add-On Aerial Firing Module 220 into position, and engaging the mounting frame with Drone 210 by pushing or sliding the mounting frame into place. In case the mounting frame is equipped with a mounting mechanism (e.g., a clamping or locking feature), the mounting mechanism may be activated to clamp down firmly on Add-On Aerial Firing Module 220, lock Add-On Aerial Firing Module 220 in place, or the like. In other cases, any other method may be used to secure Add-On Aerial Firing Module 220 to Drone 210, e.g., without a mounting frame, with a mounting frame, without clamping or locking features, or the like.

In some exemplary embodiments, in addition to securing Add-On Aerial Firing Module 220 to Drone 210, Add-On Aerial Firing Module 220 may be secured to a disposable barrel such as Barrel 230. In some exemplary embodiments, Mount 222 of Add-On Aerial Firing Module 220 may be configured for fastening Barrel 230 to Add-On Aerial Firing Module 220.

In some exemplary embodiments, Mount 222 may be configured to secure Barrel 230 to Add-On Aerial Firing Module 220. Mount 222 may be designed to enable users to easily secure Barrel 230 to Add-On Aerial Firing Module 220, to easily disconnect Barrel 230 from Add-On Aerial Firing Module 220, and to easily reconnect a new barrel to Add-On Aerial Firing Module 220. For example, Mount 222 may be designed to enable users to secure Barrel 230 to Add-On Aerial Firing Module 220 using a single pushing movement, a single gesture, a quick snap-in motion, a sliding action, a simple click-in step, a press-and-lock maneuver, a turn-and-secure twist, a pull-to-release movement, a set of one or more simple actions, or the like.

In some exemplary embodiments, Mount 222 may be designed to mechanically join Barrel 230 to Add-On Aerial Firing Module 220. For example, Mount 222 may be designed to fasten Barrel 230 to Add-On Aerial Firing Module 220, to secure them tightly to one another, to lock Barrel 230 in place, to clamp down Barrel 230 to Add-On Aerial Firing Module 220, or the like. This connection may be beneficial for ease of use and reliability of Barrel 230, especially where frequent swaps of Barrel 230 are required during dynamic operations.

In some exemplary embodiments, Mount 222 may utilize one or more securing mechanisms for fastening Barrel 230 to Add-On Aerial Firing Module 220. For example, Mount 222 may be configured to fasten Barrel 230 to Add-On Aerial Firing Module 220 by a mechanical connection designed to match the dimensions and contours of Barrel 230. For example, as depicted in Figure 2B, Mount 222 may be fitted in size and shape to the dimensions and contours of Barrel 230. For example, Mount 222 may comprise a Cavity 226 that is precisely shaped and sized to accommodate the cap of Barrel 230 (e.g., correspond to Cap 110 of Figure 1B). Mount 222 may comprise a Cavity 228 designed to match the dimensions and contours of the cartage sleeve of Barrel 230 (e.g., correspond to Cartridge Sleeve 130 of Figure 1B).

In some exemplary embodiments, in addition to, or instead of, designing Mount 222 to be fitted in size and shape to Barrel 230, Add-On Aerial Firing Module 220 may or may not comprise one or more securing mechanisms to secure Barrel 230 to Add-On Aerial Firing Module 220. In some cases, a securing mechanism may comprise threaded coupling means, clamping mechanisms, quick-release, bayonet couplings, panel mount connectors, snap-fit connections, press-fit couplings, detachable pins and cotter pins, interlocking joints, magnetic coupling, quick-connect fittings, sliding rails, dovetails, universal mounting plates, straps, or the like.

In some cases, a user may be enabled to secure Barrel 230 to Mount 222 by placing Barrel 230 into the matching cavities of Mount 222, e.g., Cavities 226 and 228. After placing Barrel 230 in its position, the user may be enabled to secure Barrel 230 to Mount 222 using a securing mechanism that enable users to easily secure Barrel 230 to Add-On Aerial Firing Module 220 and disconnect Barrel 230 from Add-On Aerial Firing Module 220. In some cases, Barrel 230 may be secured to Mount 222 when Add-On Aerial Firing Module 220 is detached from Drone 210, when Add-On Aerial Firing Module 220 is attached to Drone 210, or the like.

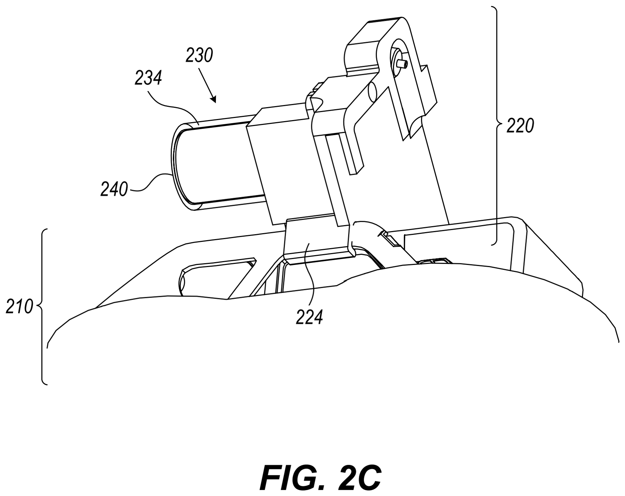

Referring now to Figure 2C showing an exemplary perspective rear-side view of an add-on aerial firing module mounted on a drone (partially shown), in accordance with some exemplary embodiments of the disclosed subject matter.

In some exemplary embodiments, Figure 2C depicts Add-On Aerial Firing Module 220 when Barrel 230 is inserted thereto. As depicted in Figure 2C, Barrel 230 may comprise a Muzzle 240, out of which Cartridge 232 (Figure 2A) may be configured to be fired. In some exemplary embodiments, Muzzle 240 may be located at an external side of Barrel 230, while the rear end of Barrel 230 (not depicted), at the opposite side from Muzzle 240, may be configured to house the cap of Barrel 230 and the rear end of Cartridge 232. For example Cavity 226 (Figure 2B) may be fitted in size and shape for positioning therein the rear end of Barrel 230.

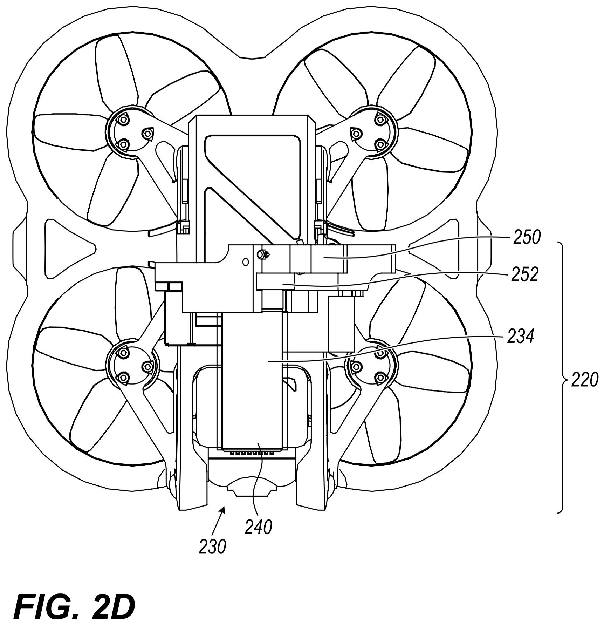

Referring now to Figure 2D showing an exemplary top view of an add-on aerial firing module mounted on a drone, in accordance with some exemplary embodiments of the disclosed subject matter.

As depicted in Figure 2D, Add-On Aerial Firing Module 220 includes Body 250 and Ammunition Cover 252. For example, Ammunition Cover 252 may comprise the cap of Barrel 230, e.g., corresponding to Cap 110 of Figures 1B-1C. As depicted in Figure 2D, a top portion of the cap may be visible when the device is viewed externally, while a remaining portion of the cap may be covered by Body 250. In other cases, the entire cap may be covered by Body 250, the entire top of the cap may be visible when the device is viewed externally, or the like. In some cases, there may be no element of Add-On Aerial Firing Module 220 that acts as a buffer between the visible area of the cap and the surrounding environment.

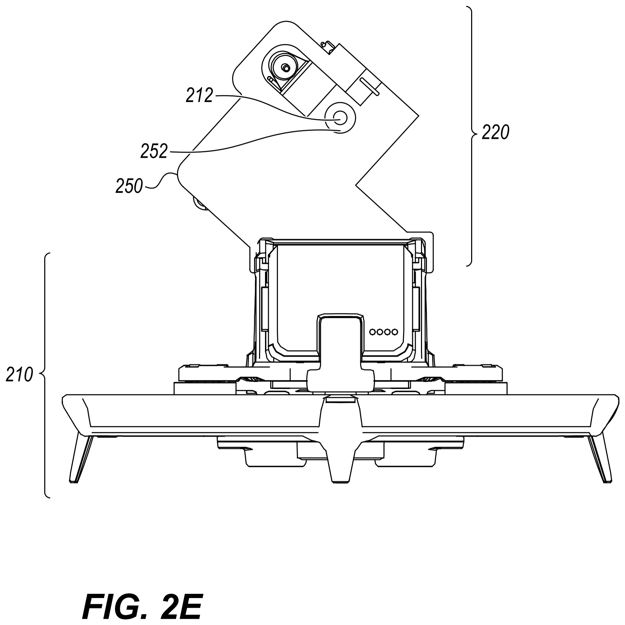

Referring now to Figure 2E showing an exemplary rear view of an add-on aerial firing module mounted on a drone, in accordance with some exemplary embodiments of the disclosed subject matter.

In some exemplary embodiments, as depicted in Figure 2E, Add-On Aerial Firing Module 220 comprises Body 250, Ammunition Cover 252, and Primer Hole 212. For example, Primer Hole 212 may comprise a hole in Ammunition Cover 252 (e.g., in the cap of Barrel 230), which may allow the firing pin to access the primer within Barrel 230. In some exemplary embodiments, Primer Hole 212 may correspond to Hole 112 of Figure 1B, while Ammunition Cover 252 may correspond to Cap 110 of Figure 1B.

In some exemplary embodiments, Add-On Aerial Firing Module 220 may or may not comprise a safety mechanism employed to prevent accidental discharge. For example, safety mechanisms may be used such as a safety switch, drop safety mechanisms, a loaded chamber indicator, or the like.

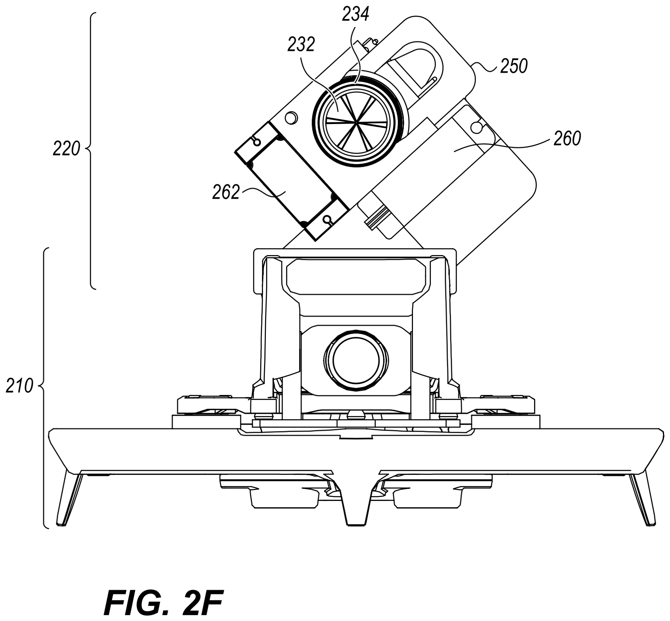

Referring now to Figure 2F showing an exemplary front view of an add-on aerial firing module mounted on a drone, in accordance with some exemplary embodiments of the disclosed subject matter.

As depicted in Figure 2F, Add-On Aerial Firing Module 220 includes Body 250, and one or more engines such as Engines 260 and 262. For example, Engines 260 and 262 may be used to engage the firing pin.

In some exemplary embodiments, Figure 2F depicts Add-On Aerial Firing Module 220 when Barrel 230 is inserted thereto. As depicted in Figure 2F, Barrel 230 is loaded with Cartridge 232, a front end of which is depicted. In some exemplary embodiments, Cartridge 232 is inserted into Cartridge Sleeve 234 of Barrel 230, e.g., according to the structure of Figure 1B.

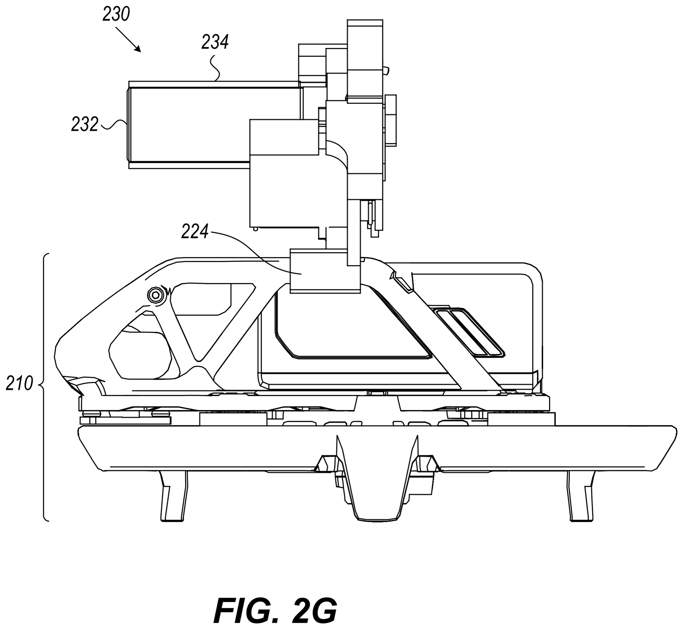

Referring now to Figure 2G showing an exemplary side view of an add-on aerial firing module mounted on a drone, in accordance with some exemplary embodiments of the disclosed subject matter.

As depicted in Figure 2G, Add-On Aerial Firing Module 220 may comprise Frame 224, which may be configured to mount Add-On Aerial Firing Module 220 over Drone 210. Frame 224 may secure Add-On Aerial Firing Module 220 to Drone 210, as described in Figure 2B.

In some exemplary embodiments, Figure 2G depicts Add-On Aerial Firing Module 220 when Barrel 230 is inserted thereto. As depicted in Figure 2G, Barrel 230 is loaded with Cartridge 232, a front end of which is depicted. In some exemplary embodiments, Cartridge 232 is inserted into Cartridge Sleeve 234 of Barrel 230.

Referring now to Figure 3A showing an exemplary front view of an add-on aerial firing module, in accordance with some exemplary embodiments of the disclosed subject matter.

In some exemplary embodiments, Figure 3A may depict Add-On Aerial Firing Module 320 independently, when Add-On Aerial Firing Module 320 is not mounted to a specific done. In some exemplary embodiments, Add-On Aerial Firing Module 320 may correspond to Add-On Aerial Firing Module 220 of Figures 2A-2G, in a scenario where Barrel 330 is inserted therein.

As depicted in Figure 3A, Add-On Aerial Firing Module 320 may comprise a mounting frame designed to secure Add-On Aerial Firing Module 320 to a drone (e.g., Drone 210 depicted in Figures 2A-2G). For example, a mounting frame such as Frame 324 may enable to mount Add-On Aerial Firing Module 320 to the drone by aligning the cavities and bulges of Frame 324 with respective bulges and cavities of the drone, ensuring that Frame 324 fits snugly and securely around a component of the drone.

In some exemplary embodiments, Barrel 330 may be loaded with Cartridge 332, a front end of which is depicted. In some exemplary embodiments, Cartridge 332 is inserted into Cartridge Sleeve 334 of Barrel 330. In some exemplary embodiments, Barrel 330 may exclude a barrel extension, and may constitute a blast chamber alone. For example, Barrel 330 may be configured, in size and shape, to house a single Cartridge 332, without having an extension that is longer than Cartridge 332.

In some exemplary embodiments, Barrel 330 may be constructed from thin and lightweight materials, such as from titanium, carbon steel, aluminum, chromoly steel, titanium, carbon fiber, nickel alloys, or the like.

In some exemplary embodiments, Add-On Aerial Firing Module 320 may comprise a Body 350, and one or more engines such as Engines 360 and 362. For example, Engines 360 and 362 may be used to engage the firing pin.

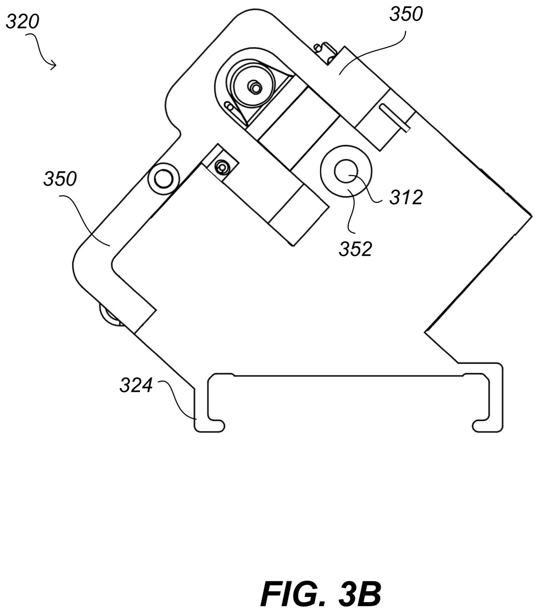

Referring now to Figure 3B showing an exemplary rear view of an add-on aerial firing module, in accordance with some exemplary embodiments of the disclosed subject matter.

In some exemplary embodiments, as depicted in Figure 3B, Add-On Aerial Firing Module 320 may comprise an Ammunition Cover 352 and a Primer Hole 312. For example, Ammunition Cover 352 and a Primer Hole 312 may correspond to Ammunition Cover 252 and Primer Hole 212 of Figures 2D and 2E.

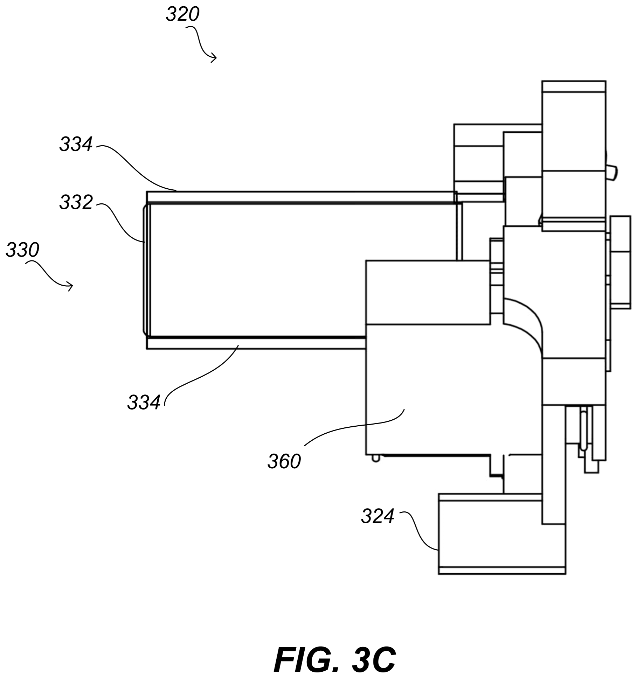

Referring now to Figure 3C showing an exemplary side view of an add-on aerial firing module, in accordance with some exemplary embodiments of the disclosed subject matter.

As depicted in Figure 3C, Add-On Aerial Firing Module 320 may comprise Frame 324 configured to mount Add-On Aerial Firing Module 320 to a drone. In some exemplary embodiments, Barrel 330 may be loaded with Cartridge 332, a front end of which coextending with the muzzle of Barrel 330. In some exemplary embodiments, Cartridge 332 is inserted into Cartridge Sleeve 334 of Barrel 330. As depicted in Figure 3C, Cartridge Sleeve 334 may wrap or surround Cartridge 332 from all sides.

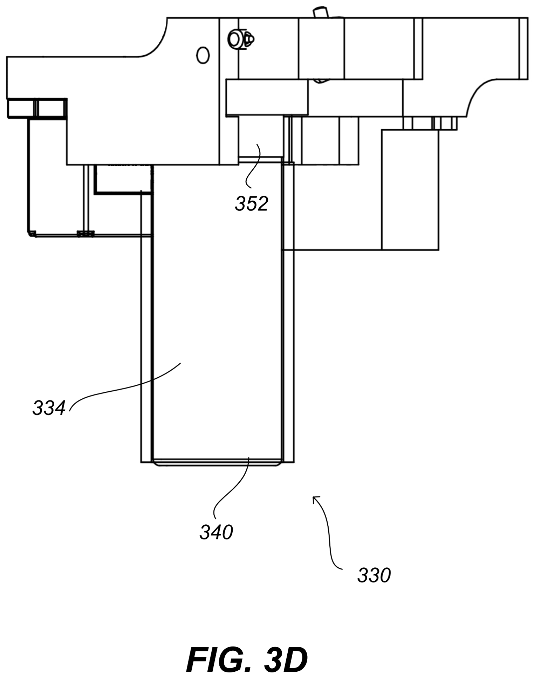

Referring now to Figure 3D showing an exemplary top view of an add-on aerial firing module, in accordance with some exemplary embodiments of the disclosed subject matter.

As depicted in Figure 3D, Add-On Aerial Firing Module 320 may comprise an Ammunition Cover 352, comprising a cap of Barrel 330. Ammunition Cover 352 may function as a disposable breach block of Barrel 330, and as a cover or cap of Barrel 330, simultaneously.

The muzzle of Barrel 330, Muzzle 340, may coextend with a front end of Cartridge 332, in case Barrel 330 is loaded with Cartridge 332 and is secured to Add-On Aerial Firing Module 320.

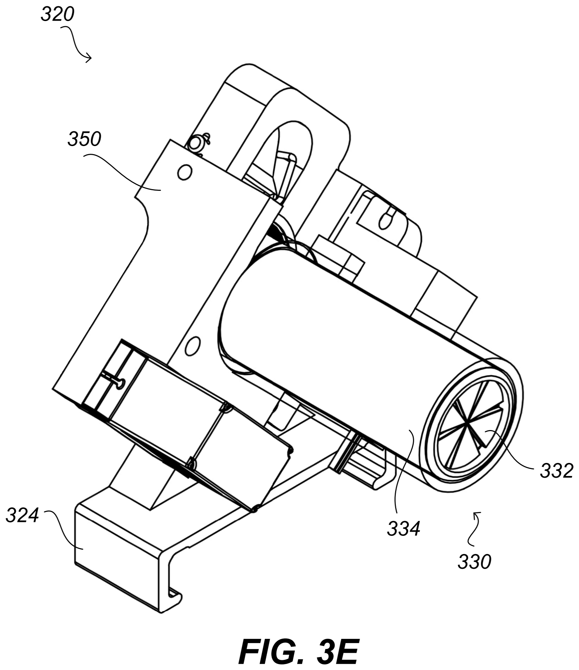

Referring now to Figure 3E showing an exemplary perspective view of an add-on aerial firing module, in accordance with some exemplary embodiments of the disclosed subject matter.

As depicted in Figure 3E, Add-On Aerial Firing Module 320 may comprise a Body 350, a disposable Barrel 330, and a Frame 324. In some exemplary embodiments, Body 350 may comprise one or more segments of Add-On Aerial Firing Module 320 that serve to interconnect various components of Add-On Aerial Firing Module 320, e.g., between an engine, one or more firing pins, a mounting structure for a drone such as a Frame 324, a mounting structure for Barrel 330, or the like. For example, Body 350 may comprise one or more segments of Add-On Aerial Firing Module 320 that lack a distinct functional purpose.

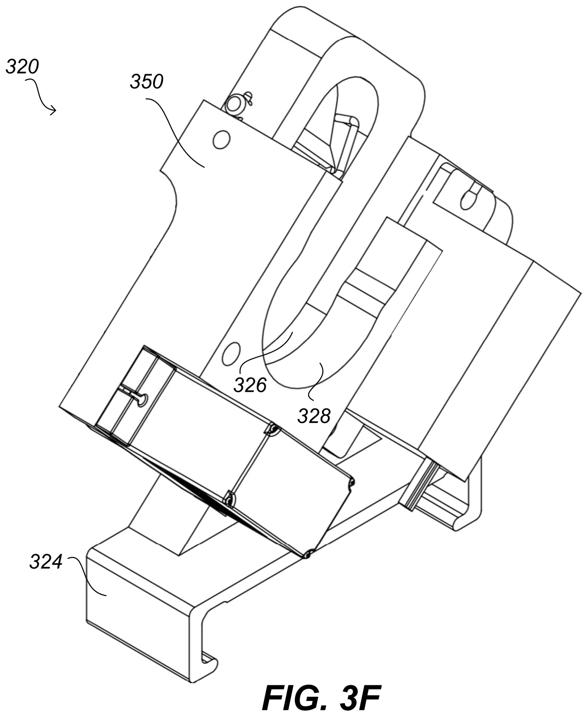

Referring now to Figure 3F showing an exemplary perspective view of an add-on aerial firing module, in accordance with some exemplary embodiments of the disclosed subject matter.

In some exemplary embodiments, the Add-On Aerial Firing Module 320 of Figure 3F may correspond to the Add-On Aerial Firing Module 320 of Figure 3E, in which Barrel 330 is detached. For example, Barrel 330 may be detached before a firing operation, after a firing operation, or the like.

As depicted in Figure 3F, Add-On Aerial Firing Module 320 comprises a mounting structure for securing Barrel 330 thereto. In some exemplary embodiments, the mounting structure may be manufactured to match the dimensions and contours of Barrel 330. For example, the mounting structure may comprise a Cavity 326 that is precisely shaped and sized to accommodate the cap of Barrel 330, a Cavity 328 designed to match the dimensions and contours of the cartage sleeve of Barrel 330. In some exemplary embodiments, a user may be enabled to secure Barrel 330 to Add-On Aerial Firing Module 320 by placing the bulges of Barrel 330 over the corresponding slots and indentations of the mounting structure.

In some exemplary embodiments, Barrel 330 may include a cap, such as Cap 110 (Figure 1B), which may act as a breach block. In some exemplary embodiments, the entire assembly of Barrel 330, including Cartridge 332, Cartridge Sleeve 334, and the cap, may be replaceable, disposable, or the like. For example, after Cartridge 332 is shot during a firing operation, the entire assembly of Barrel 330, including Cartridge 332, Cartridge Sleeve 334, and the cap, may be detached from Add-On Aerial Firing Module 320, such as by pulling Barrel 330 up from the cavities of the mounting structure.

In some exemplary embodiments, in a different embodiment (not illustrated), Add-On Aerial Firing Module 320 may comprise two or more barrels, allowing Add-On Aerial Firing Module 320 to perform more than one firing operations before being required to replace the barrels. For example, two or more firing operations may be performed simultaneously, or sequentially, using respective barrels. In such cases, a firing pin may be installed for each barrel, or a single firing pin may be used for multiple barrels. For example, in case of a single firing pin, a revolver may be user or any other a rotating cylinder that aligns each cap of each barrel with the firing pin.

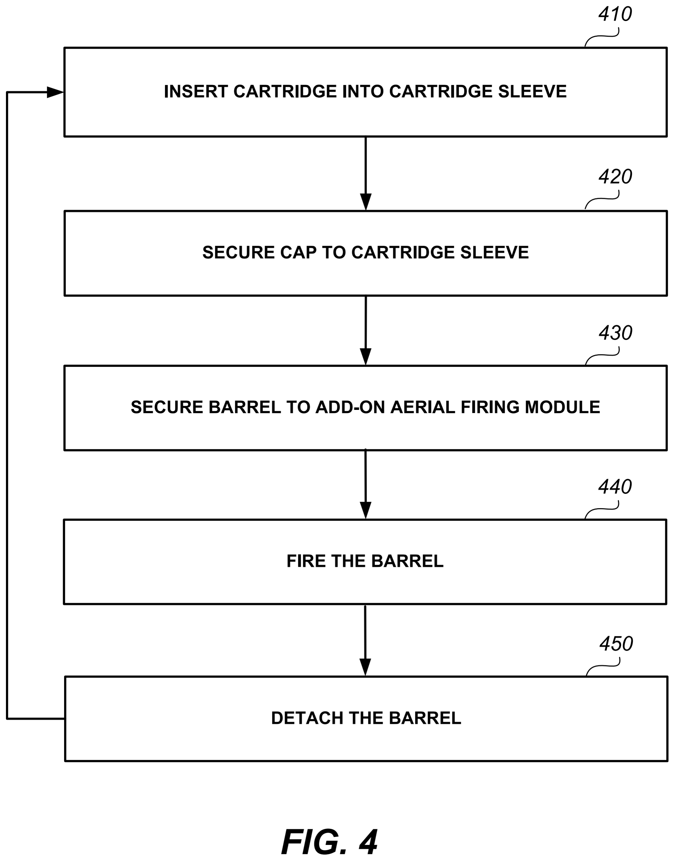

Referring now to Figure 4 showing a flowchart diagram of a method, in accordance with some exemplary embodiments of the disclosed subject matter.

In some exemplary embodiments, a disposable barrel may be operatively coupled to an add-on aerial firing module, and the add-on aerial firing module may be operatively coupled to a drone. In some exemplary embodiments, the drone may comprise a palm-held drone, a micro drone, or the like, with limited with carrying capacities. For example, the carrying capacity of the drone may be limited to 120 grams, 140 grams, 170 grams, 200 grams, or the like. In other cases, the add-on aerial firing module may be operatively coupled as a payload to any other carrier, such as an airplane, a maritime vessel, an air-traveling device, or the like.

In some exemplary embodiments, the add-on aerial firing module may be constructed to have a weight that complies with carrying capacities of the drone. In some exemplary embodiments, in order to comply with the limited carrying capacity of the drone, the add-on aerial firing module may be constructed to incorporate a lightweight disposable barrel. For example, the weight of the barrel may be reduced by constructing components of the barrel from lightweight materials such as stainless steel, carbon steel, aluminum, titanium, or printed plastic, by reducing width walls of the components, or the like. As another example, the weight of the barrel may be reduced by integrating the breach block as a disposable cap of the barrel. As another example, the weight of the barrel may be reduced by excluding any barrel extension.

In some exemplary embodiments, the disposable barrel may comprise a cap, acting as a breach block, and a cartridge sleeve. In some exemplary embodiments, the cartridge sleeve may constitute both the shooting tube and the chamber of the disposable barrel, having the length of a typical chamber. In some exemplary embodiments, the shooting tube of the disposable barrel may be coextensive with the chamber of the disposable barrel, and may not include an extension to the chamber, e.g., a barrel extension. For example, the cartridge sleeve may exclude any barrel extension that extends beyond the chamber in a direction of the barrel's muzzle. In some exemplary embodiments, the disposable barrel may be configured to be used for a near-lethal range, in which a shooting tube extending out from the chamber may be redundant.

In some exemplary embodiments, a firing operation of the disposable barrel may be performed according to Steps 410-430.

On Step 410, a cartridge may be inserted into the cartridge sleeve. In some exemplary embodiments, the cartridge may comprise at least one pellet. For example, the cartridge may comprise a slug pellet, buckshot pellets, birdshot pellets, rubber bullets, or the like.

In some exemplary embodiments, the interior of the cartridge sleeve may be fitted in size and shape to house the cartridge. In some exemplary embodiments, a rim at a rear end of the cartridge may be wider than the muzzle of the cartridge sleeve, and thinner than a rear end of the cartridge sleeve. This may necessitate to insert the cartridge into the cartridge sleeve before the cartridge sleeve is secured to the cap on Step 420. For example, the front end of the cartridge may be inserted into the rear end of the cartridge sleeve, until the entire cartridge is housed within the cartridge sleeve.

On Step 420, the cartridge sleeve, in which the cartridge was inserted, may be secured to the cap, e.g., via the rear end of the cartridge sleeve. For example, the cartridge sleeve may be securable to the cap via threaded coupling means, enabling to screw the cartridge sleeve into and out of the cap, enabling to screw the cap into and out of the cartridge sleeve, or the like. In some exemplary embodiments, a front end of the cartridge sleeve may comprise a muzzle of the disposable barrel, through which a cartridge may be fired.

On Step 430, the disposable barrel, including the coupled cap and cartridge sleeve, may be secured to the add-on aerial firing module. In some exemplary embodiments, the add-on aerial firing module may comprise a mount, such as Mount 222 of Figures 2A-2G, which is operatively coupled to the disposable barrel, enabling to detach the disposable barrel from the mount by a single user operation. In some exemplary embodiments, the disposable barrel may be attachable and detachable from the add-on aerial firing module, e.g., via a securing mechanism.

In some exemplary embodiments, the add-on aerial firing module may be secured to a drone, e.g., before a firing operation. For example, the disposable barrel may be secured to the add-on aerial firing module before the add-on aerial firing module is secured to a drone, after the add-on aerial firing module is secured to a drone, or the like. In some exemplary embodiments, the add-on aerial firing module may be secured to a drone via coupling means such as Frame 324 of Figures 3A-3F.

On Step 440, the disposable barrel may be fired. In some exemplary embodiments, a firing operation of the disposable barrel comprising firing the cartridge out of the muzzle. In some exemplary embodiments, the firing operation may be performed in response to a user instruction from a remote controller such as via a joystick movement, button selections, touchscreen input, voice input, or the like. For example, the drone may comprise an imaging drone that provides users with FPV, and a user may instruct to perform a firing operation based on the provided images of the FPV.

In some exemplary embodiments, the disposable barrel may be configured to perform firing operations for a near-lethal range, such as a range of 1-5 meters. In some exemplary embodiments, the firing operation may result with a deformation of the cap of the barrel, the cartridge sleeve, or the like. In some exemplary embodiments, the firing operation may cause one or more gases to be released in the cartridge sleeve, resulting with the deformation of the barrel.

On Step 450, the disposable barrel may be replaced, e.g., due to the deformation. In some exemplary embodiments, a subsequent firing operation may be performed by detaching the disposable barrel from the add-on aerial firing module, and replacing the disposable barrel with a second disposable barrel different from the disposable barrel according to Steps 410-440. For example, the second disposable barrel may comprise a second cap and a second cartridge sleeve.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

## Claims

1. A disposable barrel that is operatively couplable to an aerial firing module, the aerial firing module is operatively couplable to a drone, the disposable barrel comprising:

   a cap; and
   a cartridge sleeve that is securable to the cap via a rear end of the cartridge sleeve, wherein a front end of the cartridge sleeve comprises a muzzle of the disposable barrel, the cartridge sleeve configured in size and shape to house a cartridge,
   wherein the cap is configured to act as a breach block during a firing operation of the disposable barrel,
   wherein the disposable barrel is attachable and detachable from the aerial firing module, whereby detaching the disposable barrel from the aerial firing module comprises detaching the cap and the cartridge sleeve from the aerial firing module.

2. The disposable barrel of Claim 1, wherein the firing operation of the disposable barrel comprising firing the cartridge out of the muzzle, thereby causing a deformation of an element of the disposable barrel, the element is selected from a group consisting of: the cap and the cartridge sleeve.

3. The disposable barrel of Claim 2, wherein a subsequent firing operation is performed by:

   detaching the disposable barrel from the aerial firing module; and
   replacing the disposable barrel with a second disposable barrel different from the disposable barrel, the second disposable barrel comprises a second cap and a second cartridge sleeve, wherein the subsequent firing operation occurs after the firing operation.

4. The disposable barrel of Claim 2, wherein the firing operation releases one or more gases in the cartridge sleeve, wherein the deformation is caused by at least one of:
   the one or more gases, an explosive force of the firing operation, or a recoil force.

5. The disposable barrel of Claim 1, wherein the disposable barrel constitutes both a shooting tube and a chamber, wherein the cartridge sleeve excludes any barrel extension that extends beyond the chamber in a direction of the muzzle.

6. The disposable barrel of Claim 1, wherein the cartridge sleeve is securable to the cap using threaded coupling means.

7. The disposable barrel of Claim 1, wherein the cartridge is insertable into the cartridge sleeve via the rear end of the cartridge sleeve, wherein a rim of the cartridge is wider than the muzzle of the cartridge sleeve, wherein the cartridge is insertable into the cartridge sleeve before the rear end of the cartridge sleeve is secured to the cap.

8. The disposable barrel of Claim 1, wherein the drone has a carrying capacity of no more than 300 grams, wherein a weight of the disposable barrel enables the aerial firing module to comply with the carrying capacity of the drone.

9. The disposable barrel of Claim 1, wherein said configuring the cap to act as the breach block comprises using the cap as a seal to prevent propellant gas in the cartridge sleeve from escaping through the rear end of the cartridge sleeve, and to channel the propellant gas forward towards the muzzle.

10. The disposable barrel of Claim 1, wherein the cartridge comprises at least one pellet, and wherein the cap and the cartridge sleeve are made of at least one material selected from:

stainless steel,
carbon steel,
aluminum,
titanium, or
printed plastic.

11. A system comprising:

a drone;
an aerial firing module that is mountable on said drone, wherein the on aerial firing module is operative to selectively receive a disposable barrel; and
the disposable barrel, wherein the disposable barrel comprises:

a cap; and
a cartridge sleeve that is securable to the cap via a rear end of the cartridge sleeve, wherein a front end of the cartridge sleeve comprises a muzzle of the disposable barrel, the cartridge sleeve configured in size and shape to house a cartridge,
wherein the cap is configured to act as a breach block during a firing operation of the disposable barrel,
wherein the disposable barrel is attachable and detachable from the aerial firing module.

12. The system of Claim 12, wherein the aerial firing module comprises a mount that is operatively coupled to the disposable barrel, wherein a single user operation can detach the disposable barrel from the mount.

13. The disposable barrel of Claim 12, wherein the disposable barrel is manufactured from lightweight material, the lightweight material is selected from a group consisting of: stainless steel, carbon steel, aluminum, titanium, and printed plastic.

14. The disposable barrel of Claim 13, wherein the drone has a carrying capacity of no more than 500 grams, wherein a weight of the disposable barrel enables the aerial firing module to comply with the carrying capacity of the drone, and wherein the weight of the aerial firing module is less than 200 grams.

15. A method for utilizing an aerial firing module that is mounted on a drone, the method comprising:

securing a first disposable barrel to the aerial firing module, the first disposable barrel comprises a first cartridge sleeve that houses a first cartridge, a first cap is secured to a rear end of the first cartridge sleeve;
performing a first firing operation, wherein the first cap acts as a breach block during the first firing operation, whereby the first disposable barrel or portion thereof is deformed;
detaching the first disposable barrel from the aerial firing module;
securing a second disposable barrel to the aerial firing module, the second disposable barrel comprises a second cartridge sleeve that houses a second cartridge, a second cap is secured to a rear end of the second cartridge sleeve;
performing a second firing operation, wherein the second cap acts as a breach block during the second firing operation, whereby the second disposable barrel or portion thereof is deformed.

**FIG. 1A**

**FIG. 1B**

**FIG. 1C**

**FIG. 2A**

**FIG. 2B**

**FIG. 2C**

**FIG. 2D**

**FIG. 2E**

**FIG. 2F**

**FIG. 2G**

**FIG. 3A**

320

350

350

312

352

324

**FIG. 3B**

320

334

332

330

334

360

324

**FIG. 3C**

*352*

*334*

*340*

*330*

# FIG. 3D

*320*

*350*

*324*

*334*

*332*

*330*

**FIG. 3E**

FIG. 3F

```
                                              410
┌─────────────────────────────────────────────────┐
│      INSERT CARTRIDGE INTO CARTRIDGE SLEEVE       │
└─────────────────────────────────────────────────┘
                        │
                        ▼                      420
┌─────────────────────────────────────────────────┐
│          SECURE CAP TO CARTRIDGE SLEEVE           │
└─────────────────────────────────────────────────┘
                        │
                        ▼                      430
┌─────────────────────────────────────────────────┐
│     SECURE BARREL TO ADD-ON AERIAL FIRING MODULE  │
└─────────────────────────────────────────────────┘
                        │
                        ▼                      440
┌─────────────────────────────────────────────────┐
│                 FIRE THE BARREL                   │
└─────────────────────────────────────────────────┘
                        │
                        ▼                      450
┌─────────────────────────────────────────────────┐
│               DETACH THE BARREL                   │
└─────────────────────────────────────────────────┘
```

*FIG. 4*

Europäisches
Patentamt

European
Patent Office

Office européen
des brevets

# EUROPEAN SEARCH REPORT

**Application Number**

EP 25 22 3925

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/030666 A1 (MENEFEE III JAMES Y [US]) 2 February 2017 (2017-02-02) | 1-10 | INV. F41A3/00 |
| A | * paragraphs [0047] - [0117]; figures 1-8 * | 11-15 | F41A21/12 |
| X | US 4 411 086 A (CHRISTOPHERSON JOHN K [US]) 25 October 1983 (1983-10-25) | 1-4,6-10 | |
| A | * column 2, line 29 - column 4, line 37; figures 1-5 * | 5,11-15 | |
| A | FR 3 114 144 A1 (LAVANANT TANGUY [FR]) 18 March 2022 (2022-03-18) * paragraphs [0002] - [0015]; figures 1, 2 * | 1-15 | |

**TECHNICAL FIELDS SEARCHED (IPC)**

F41A
B64U

The present search report has been drawn up for all claims

| Place of search | Date of completion of the search | Examiner |
|---|---|---|
| The Hague | 30 April 2026 | Kasten, Klaus |

EPO FORM 1503 03.82 (P04C01)

EP 4 760 196 A1

**ANNEX TO THE EUROPEAN SEARCH REPORT
ON EUROPEAN PATENT APPLICATION NO.**

EP 25 22 3925

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2026

| Patent document cited in search report | | Publication date | Patent family member(s) | Publication date |
|---|---|---|---|---|
| US 2017030666 | A1 | 02-02-2017 | NONE | |
| US 4411086 | A | 25-10-1983 | NONE | |
| FR 3114144 | A1 | 18-03-2022 | NONE | |

EPO FORM P0459

For more details about this annex : see Official Journal of the European Patent Office, No. 12/82

**EP 4 760 196 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IL 317737